(19) Europäisches Patentamt
European Patent Office
Office européen des brevets

(11) Numéro de publication: **0 490 782 B1**

(12) **FASCICULE DE BREVET EUROPEEN**

(45) Date de publication de fascicule du brevet: **17.05.95**

(51) Int. Cl.[6]: **A01N 25/04**, A01N 25/30

(21) Numéro de dépôt: **91420406.0**

(22) Date de dépôt: **15.11.91**

# (54) Suspo-émulsions phytosanitaires.

(30) Priorité: **10.12.90 FR 9015739**

(43) Date de publication de la demande:
**17.06.92 Bulletin 92/25**

(45) Mention de la délivrance du brevet:
**17.05.95 Bulletin 95/20**

(84) Etats contractants désignés:
**AT BE CH DE DK ES FR GB GR IT LI LU NL SE**

(56) Documents cités:
**EP-A- 0 091 331**
**EP-A- 0 261 492**
**DE-A- 2 241 667**
**GB-A- 2 123 294**

**PESTICIDE SCIENCE vol. 29, no. 4, Août 1990, BARKING, GB; P.J. MULOUEEN ET AL.: 'Recent Development in Suspoemulsions'**

(73) Titulaire: **RHONE-POULENC CHIMIE**
**25, Ouai Paul Doumer**
**F-92408 Courbevoie Cédex (FR)**

(72) Inventeur: **Fiard, Jean-François**
**16, rue des Orteaux**
**F-75020 Paris (FR)**
Inventeur: **Mercier, Jean-Michel**
**2, Résidence Plein-Sud**
**F-94320 Thiais (FR)**
Inventeur: **Prevotat, Marie-Luce**
**39, rue Blomet**
**F-75015 Paris (FR)**

(74) Mandataire: **Seugnet, Jean Louis et al**
**RHONE-POULENC CHIMIE,**
**Direction de la Propriété Industrielle,**
**25, Ouai Paul Doumer**
**F-92408 Courbevoie Cédex (FR)**

EP 0 490 782 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouvelles suspo-émulsions phytosanitaires.

Les matières actives telles que les insecticides, les germicides, les herbicides, les fongicides, les acaricides, les nématicides, les molluscicides, les rodenticides, les attractifs, les répulsifs, les associations de plusieurs de ces composés, sont généralement insolubles dans l'eau.

Elles peuvent être mises en oeuvre habituellement sous forme de solutions dans des solvants organiques, ces solutions étant ensuite émulsionnées dans l'eau, lors de leur utilisation.

L'emploi de solvants, tels que les xylènes ou le kérosène, pose d'évidents problèmes de pollution de l'environnement.

Un autre mode de préparation des compositions de matières actives consiste en des dispersions aqueuses fluides appelées couramment "flowable" qui sont diluées lors de leur application.

Ces dispersions aqueuses contiennent un ou plusieurs tensio-actifs.

La prise en compte de plus en plus sérieuse des différents problèmes de pollution de l'environnement, conduit à la recherche de compositions phytosanitaires de moins en moins toxiques.

La présente invention contribue à cette évolution par l'utilisation d'un système tensio-actif constitué au moins en partie de composés non-toxiques, non-irritants et biodégradables.

Le caractère émulsifiant et dispersant des sucroglycérides est connu, pour préparer des systèmes dispersés aqueux de matières grasses.

Les sucroglycérides sont des mélanges de produits, obtenus par transestérification de triglycérides, naturels ou de synthèse, avec le saccharose. Ces mélanges contiennent des monoglycérides, des diglycérides, de faibles quantités de triglycérides non transestérifiés, des monoesters et diesters du saccharose.

Le brevet EP-A-0 091 331, qui décrit un procédé de préparation de sucroglycérides fluides, indique également que lesdits sucroglycérides ont des propriétés tensio-actives, qui peuvent être utilisées notamment pour la préparation d'émulsions d'huiles essentielles ou de lait maigre réengraissé. Aux sucroglycérides peuvent également être associées des lécithines et des huiles fluides.

Le brevet CH 423.442 décrit un procédé de préparation d'émulsions d'huiles ou de corps gras solides dans l'eau, utilisant comme système émulsifiant des sucroglycérides et une lécithine.

La présente invention consiste à utiliser ce pouvoir émulsifiant et/ou dispersant des sucroglycérides pour l'obtention de suspo-émulsions de matières actives phytosanitaires.

Plus précisément, l'invention consiste en une suspo-émulsion de matière active solide, de point de fusion supérieur ou égal à 45 °C, sensiblement insoluble dans l'eau, caractérisée en ce qu'elle comporte au moins une huile, un système tensio-actif comprenant au moins des sucroglycérides, ladite matière active et, soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

La suspo-émulsion selon l'invention peut être obtenue en mélangeant les différents composés qui la constituent.

Cependant afin de mieux ajuster les propriétés souhaitées, c'est-à-dire notamment la taille des particules en émulsion et la taille des particules en suspension, la suspo-émulsion sera de préférence préparée à partir d'une suspension de la matière active et d'une émulsion de l'huile.

De préférence, l'invention consiste donc en une suspo-émulsion de matière active, solide de point de fusion supérieur ou égal à 45 °C, sensiblement insoluble dans l'eau, caractérisée en ce qu'elle est obtenue par mélangeage :

- d'une émulsion aqueuse d'au moins une huile contenant un système tensio-actif comprenant au moins des sucroglycérides,
- avec une suspension aqueuse de ladite matière active, comprenant, soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

La suspension aqueuse, servant à préparer la suspo-émulsion de l'invention, contient de préférence dans son système tensio-actif en outre un agent mouillant, bien que les triglycérides alcoxylés puissent également jouer ce rôle, notamment pour les suspensions les moins concentrées en matière active.

L'émulsion aqueuse mise en oeuvre dans la présente invention est de préférence une émulsion directe (huile dans eau).

Comme indiqué précédemment, les sucroglycérides proviennent de la transestérification de triglycérides par le saccharose.

Dans le présent texte, le terme "sucroglycérides" sera utilisé au pluriel, afin d'indiquer qu'ils ne sont pas constitués par un seul composé chimique.

Comme triglycérides, on utilise généralement les triglycérides des acides aliphatiques, saturés ou insaturés, ayant au moins 4 atomes de carbone. De préférence les acides dont dérivent les triglycérides ont 10 à 20 atomes de carbone.

La préparation des sucroglycérides peut se faire à partir de triglycérides de synthèse, obtenus par réaction du glycérol et d'acides gras. Cependant, il est plus intéressant au plan économique de faire appel aux triglycérides naturels. Ces triglycérides naturels sont des mélanges de triglycérides.

Comme exemples de tels triglycérides naturels, on peut citer le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

Dans la présente invention, les sucroglycérides utilisés proviennent de l'huile de palme, du saindoux, de l'huile de coprah, du suif, de l'huile de colza, l'huile de ricin.

Ils se présentent, soit sous forme liquide comme les sucroglycérides de l'huile de colza ou de l'huile de ricin, soit sous forme de pâtes plus ou moins consistantes, se différenciant notamment par leur point de fusion :

| | |
|---|---|
| - sucroglycérides de saindoux | 47 à 50 ° C, |
| - sucroglycérides de suif | 50 à 55 ° C, |
| - sucroglycérides d'huile de palme | 55 à 58 ° C |
| - sucroglycérides d'huile de coprah | 60 à 62 ° C. |

Un mode opératoire de préparation des sucroglycérides est décrit dans le brevet FR-A-2 463 152.

L'émulsion aqueuse entrant dans la composition de la suspo-émulsion peut également comporter un phospholipide, en association avec les sucroglycérides.

Parmi les phospholipides utilisés avec les sucroglycérides dans le cadre de l'invention, on peut citer les lécithines brutes d'origine végétale ou animale, telles que la lécithine de soja, la lécithine du jaune d'oeuf ainsi que toute fraction de lécithine.

Par huile, on entend dans le présent texte :

- les triglycérides naturels,
- les esters d'alkyle de 1 à 4 atomes de carbone des acides gras entrant dans la composition des triglycérides naturels

qui sont liquides à température ambiante, c'est-à-dire à environ 20 ° C.

Cette huile peut être notamment, et de manière non limitative, l'huile de colza, l'huile de tournesol, l'huile de palme, l'huile d'arachide, l'huile de lin, l'huile de coprah, l'huile de pépins de raisin, l'huile de noix, l'huile de poisson, l'oléate de méthyle.

On utilise de préférence, notamment pour des questions économiques l'huile de colza, l'huile de tournesol, l'huile de soja, l'oléate de méthyle.

L'émulsion aqueuse, entrant dans la composition des suspo-émulsions de l'invention, comporte généralement, en poids par rapport au volume total de l'émulsion :

- de 0,2 % à 15 % de sucroglycérides,
- de 0 % à 8 % de phospholipide,
- de 5 % à 70 % d'huile,
- et le complément à 100 % d'eau.

De préférence, la composition pondérale de l'émulsion aqueuse est la suivante :

- de 0,5 % à 10 % de sucroglycérides,
- de 0 % à 5 % de phospholipide,
- de 10 % à 60 % d'huile,
- et le complément à 100 % d'eau.

Cette émulsion peut également comprendre d'autres composés tels que les triglycérides alcoxylés, les acides gras alcoxylés, les esters de sorbitan et les esters de sorbitan alcoxylés, qui sont plus particulièrement choisis parmi les triglycérides éthoxylés, les acides gras éthoxylés, les esters de sorbitan et les esters de sorbitan éthoxylés.

Les triglycérides éthoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de

colza, l'huile de coprah, l'huile de noix de coco) éthoxylés.

Les acides gras éthoxylés sont des esters d'acides gras (tels que par exemple l'acide oléïque, l'acide stéarique) éthoxylés.

Les esters de sorbitan sont des esters du sorbitol cyclisé d'acides gras de $C_{10}$ à $C_{20}$ comme l'acide laurique, l'acide stéarique ou l'acide oléïque. Ces esters de sorbitan peuvent également être éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylène-glycol.

De même le terme acide gras éthoxylé inclut aussi bien les produits obtenus par éthoxylation d'un acide gras par l'oxyde d'éthylène que ceux obtenus par estérification d'un acide gras par un polyéthylène-glycol.

Les triglycérides alcoxylés et/ou les acides gras alcoxylés et/ou les esters de sorbitan et/ou les esters de sorbitan alcoxylés représentent généralement de 0 à 10 % en poids par volume de l'émulsion et de préférence de 0,2 % à 6 % en poids/volume.

Les émulsions aqueuses utilisées pour préparer les suspo-émulsions de l'invention présentent une très bonne stabilité physico-chimique et une bonne compatibilité avec un grand nombre de suspensions de matières actives.

La matière active phytosanitaire utilisée dans la présente invention est sensiblement insoluble dans l'eau, ce qui signifie que sa solubilité dans l'eau à 20 °C est inférieure à 5 g/litre.

Il est bien évident que les matières actives utilisées doivent être stables vis-à-vis de l'eau.

Comme exemples non limitatifs de matières actives qui peuvent être mises en oeuvre dans les suspo-émulsions de l'invention, on peut citer :

- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,
- l'isoproturon,
- la simazine,
- l'améthryne,
- le phenmdipham,
- le pendiméthalin.

Les sucroglycérides qui peuvent entrer dans la composition du système tensio-actif des suspensions de matière active, ont été définis précédemment pour les émulsions.

Il peut être avantageux dans certains cas d'associer aux sucroglycérides un phospholipide, tel que défini précédemment, sans que la présence d'un tel composé constitue un élément critique de la suspension de matière active.

Dans le système tensio-actif à base de sucroglycérides, utilisé dans la suspension, le rapport pondéral phospholipide/sucroglycérides est généralement de 0 à 3.

Le système tensio-actif à base de sucroglycérides, pouvant être utilisé pour préparer la suspension de matière active, comporte également au moins un triglycéride alcoxylé et/ou un acide gras alcoxylé et/ou un ester de sorbitan et/ou un ester de sorbitan alcoxylé. Ce sont plus particulièrement les triglycérides éthoxylés, les acides gras éthoxylés, les esters de sorbitan et les esters de sorbitan éthoxylés qui ont été décrits précédemment.

Les triglycérides alcoxylés et/ou les acides gras alcoxylés et/ou les esters de sorbitan et/ou les esters de sorbitan alcoxylés représentent généralement de 0,1 à 3 % en poids par volume de la suspension et de préférence de 0,2 % à 2,8 % en poids/volume.

Le système tensio-actif à base de sucroglycérides, pouvant être utilisé pour préparer la suspension de matière active, comporte de préférence également au moins un agent mouillant.

L'agent mouillant est un composé tel que défini dans la norme NF T 73-000.

Il s'agit notamment de sels anioniques de tensio-actifs et d'alcools alcoxylés ou d'alkylphénols alcoxylés représentés par les formules suivantes :

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :

- $R_1$ représente
  . un radical alkylphényle (tel que dodécylphényle),
  . un radical alkyle (tel que dodécyle),
  . un radical bis(octyloxycarbonyl)-1,2 éthyle, (de préférence bis(éthyl-2 hexyloxycarbonyl)-1,2 éthyle,
- $R_2$ représente
  . un radical alkyle (tel que dodécyle),
  . un radical alkylphénol éthoxylé (tel que nonylphénol éthoxylé avec 2 à 50 motifs OE),
  . un radical alkyle éthoxylé,
- $R_3$ représente
  . un radical alkylaryle (tel que nonylphényle, alkylnaphtyle),
  . un radical alkyle ayant 8 à 20 atomes de carbone, et de préférence de 10 à 14 atomes de carbone,
- n est un nombre de 4 à 12,
- $R_4$ représente un radical alkyle ayant 10 à 22 atomes de carbone,
- M représente Na, K, $NH_4$ ou un cation triéthanolammonium.

L'agent mouillant peut également être un tensio-actif à base de silicone tel que des copolymères de polydiméthylsiloxane et soit d'homopolymère d'éthylène-glycol, soit de copolymère d'éthylène-glycol et de propylène-glycol ou un tensio-actif fluoré tel que des composés comportant une chaîne linéaire perfluorocarbonée, hydrophobe et oléophobe, et une partie hydrophile comportant par exemple un groupement sulfonique, acide ou neutralisé, un groupement carboxylique, un reste alcool éthoxylé.

Les suspensions comprennent généralement de 0,05 % à 1 % en poids d'agent mouillant par rapport au volume total de la suspension, et de préférence de 0,1 % à 0,8 % en poids/volume.

Le tensio-actif non-ionique, qui peut être utilisé pour préparer la suspension de matière active, peut être choisi notamment parmi :

- les di(phényl-1 éthyl) phénols alcoxylés,
- les tri(phényl-1 éthyl) phénols alcoxylés,
- les alkylphénols alcoxylés,
- les amines grasses alcoxylées,
- les alcools gras alcoxylés,
- les polymères séquencés oxyde d'éthylène-oxyde de propylène (OE-OP) ou oxyde d'éthylène-oxyde de propylène-oxyde d'éthylène (OE-OP-OE).

Les motifs alcoxyles de ces tensio-actifs sont des motifs oxyéthylène et/ou oxypropylène.

Leur nombre varie habituellement de 2 à 100 selon le HLB (balance hydrophilie/lipophilie) souhaité.

De préférence le nombre de motifs alcoxyles se situe entre 4 et 50.

Les alkylphénols alcoxylés ont généralement 1 ou 2 groupes alkyles, linéaires ou ramifiés, ayant 4 à 12 atomes de carbone, notamment octyles, nonyles ou dodécyles.

Les amines grasses alcoxylées ont généralement de 10 à 22 atomes de carbone.

Les alcools gras alcoxylés ont généralement de 6 à 22 atomes de carbone.

A titre d'exemples de tensio-actifs non-ioniques, on peut citer :

- le di(phényl-1 éthyl)phénol éthoxylé avec 15 motifs oxyde d'éthylène (OE),
- le tri(phényl-1 éthyl)phénol éthoxylé avec 16 motifs OE,
- le tri(phényl-1 éthyl)phénol éthoxylé avec 25 motifs OE,
- le tri(phényl-1 éthyl)phénol éthoxylé avec 40 motifs OE,
- les tri(phényl-1 éthyl)phénols éthoxy-propoxylés,
- les nonylphénols éthoxy-propoxylés,
- les polymères triséquencés OE-OP-OE.

Le tensio-actif anionique, qui peut être utilisé pour préparer la suspension de matière active, est choisi notamment parmi :

- les esters phosphoriques des alkylphénols éthoxylés, des di(phényl-1 éthyl)phénols éthoxylés, des tri-(phényl-1 éthyl)phénols éthoxylés, des alcools gras éthoxylés ;
- les esters sulfuriques des alkylphénols éthoxylés, des di(phényl-1 éthyl)phénols éthoxylés, des tri-(phényl-1 éthyl)phénols éthoxylés, des alcools gras éthoxylés ;
- les esters sulfoniques des alkylphénols éthoxylés, des di(phényl-1 éthyl)phénols éthoxylés, des tri-(phényl-1 éthyl)phénols éthoxylés ;
- les sels des acides polycarboxyliques, les homo- et copolymères d'acides polycarboxyliques (comme les acides polyacryliques et polyméthacryliques), les copolymères à base d'anhydride maléïque et de diisobutylène ;
- les alkylnaphtalène-sulfonates, les poly(alkylnaphtalène-sulfonates) ;
- les dihydroxydiphényl-sulfonates condensés avec le formol.

A titre d'exemples de tensio-actifs anioniques, on peut citer notamment :

- les sels de triéthanolamine des mono- et diester phosphoriques du tri(phényl-1 éthyl)phénol éthoxylé avec 16 motifs OE,
- le sulfate acide du di(phényl-1 éthyl)phénol éthoxylé avec 11 motifs OE,
- le phosphate acide de nonylphénol éthoxylé avec 9 motifs OE,
- le méthylnaphtalène-sulfonate de sodium,
- le sel de sodium de l'acide polyacrylique.

On peut bien évidemment utiliser des mélanges de tensio-actifs non-ioniques et/ou de tensio-actifs anioniques.

La suspension aqueuse de la matière active comporte généralement de 5 % à 90 % en poids de matière active, par rapport au volume total de la suspension et de préférence de 10 % à 85 % en poids/volume.

Soit elle comprend de 0,2 % à 15 % en poids/volume de tensio-actif non-ionique et/ou anionique et de préférence de 0,5 % à 10 % en poids/volume.

Soit elle comprend de :

- 0,1 % à 5 % en poids de sucroglycérides et de phospholipide, et de préférence de 0,2 % à 4 %,
- 0,1 % à 3 % en poids de triglycéride alcoxylé et/ou d'acide gras alcoxylé et/ou d'ester de sorbitan et/ou d'ester de sorbitan alcoxylé tels que définis précédemment, et de préférence de 0,2 % à 2,8 %,
- 0,05 % à 1 % en poids d'un agent mouillant, et de préférence de 0,1 % à 0,8 %,

par rapport au volume total de la suspension aqueuse.

Les suspo-émulsions selon l'invention peuvent contenir, outre les composés définis précédemment, d'autres composés usuels dans les compositions phytosanitaires, tels que des antimousses comme les organopolysiloxanes, des épaississants comme la gomme xanthane, des conservateurs, un antigel comme le monopropylène-glycol ou le monoéthylène-glycol.

Comme indiqué précédemment, la suspo-émulsion peut être préparée à partir des différents composés qui la constituent.

De préférence, la suspo-émulsion est préparée par mélangeage de la suspension aqueuse de matière active et de l'émulsion aqueuse précédemment décrites.

Les proportions de suspension et d'émulsion sont telles que la suspo-émulsion contient globalement de 5 % à 60 % en poids de matière active par rapport à son volume total.

Les proportions de suspension et d'émulsion sont telles que la suspo-émulsion contient de 0,1 % à 12 % en poids de tensio-actif non-ionique et/ou anionique par rapport à son volume total.

Les proportions de suspension et d'émulsion sont telles que la suspo-émulsion contient de 0,2 % à 15 % en poids de sucroglycérides par rapport à son volume total.

Les proportions de suspension et d'émulsion sont telles que la suspo-émulsion contient de 0 % à 6 % en poids de phospholipide par rapport à son volume total.

Les proportions de suspension et d'émulsion sont telles que la suspo-émulsion contient de 0,1 % à 5 % en poids de triglycéride alcoxylé et/ou d'acide gras alcoxylé et/ou d'ester de sorbitan et/ou d'ester de sorbitan alcoxylé par rapport à son volume total.

Les proportions de suspension et d'émulsion sont telles que la suspo-émulsion contient de 0,05 % à 0,7 % en poids d'agent mouillant par rapport à son volume total.

Les proportions de suspension et d'émulsion sont telles que la suspo-émulsion contient de 3 % à 50 % en poids d'huile par rapport à son volume total.

Les suspo-émulsions de l'invention sont très stables sur une large gamme de température (par exemple entre - 10 °C et + 54 °C).

Elles présentent l'avantage d'être filmogènes, ce qui assure une bonne fixation et une bonne permanence de la matière active sur les plantes à traiter ou sur les parasites à détruire.

De par la présence de sucroglycérides, les suspo-émulsions possèdent un pouvoir antimousse.

Dans les exemples qui suivent et qui illustrent l'invention, les quantités des différents constituants des suspensions ou des émulsions sont données en grammes pour l'obtention de 1000 $cm^3$ de suspension ou d'émulsion.

EXEMPLES DE PREPARATION DE SUSPENSIONS DE MATIERE ACTIVE

Le mode opératoire utilisé est le même pour les différents exemples.

Il consiste tout d'abord à disperser par simple agitation les sucroglycérides fondus, dans l'eau à 60 °C, à raison de 10 % en poids/poids.

Cette pré-dispersion permet le gonflement des sucroglycérides.

Dans les exemples, on indiquera simplement que les sucroglycérides sont mis en oeuvre sous forme de pré-dispersion à 10 % poids/poids dans l'eau.

On dissout dans l'eau le triglycéride éthoxylé ou l'acide gras éthoxylé et l'agent mouillant.

On ajoute ensuite la pré-dispersion de sucroglycérides et éventuellement le composé antigel.

Puis on ajoute la matière active par petites fractions sous agitation ainsi que, le cas échéant, l'antimousse.

Le mélange est homogénéisé à l'aide d'une turbine, puis est broyé pendant quelques minutes dans un broyeur à billes (billes de verre de 1 mm de diamètre) jusqu'à obtention d'une granulométrie moyenne de la matière active de 3 à 4 micromètres.

On suit l'évolution du diamètre des particules à l'aide d'un granulomètre.

Le cas échéant, on ajoute un épaississant (gomme xanthane) et on agite encore pendant environ 30 minutes.

Exemples 1 à 4 et essai comparatif A

Préparation de suspensions aqueuses d'atrazine.

L'atrazine est un herbicide connu, ayant un point de fusion de 175 °C et une solubilité dans l'eau à 25 °C de 0,028 g/l :

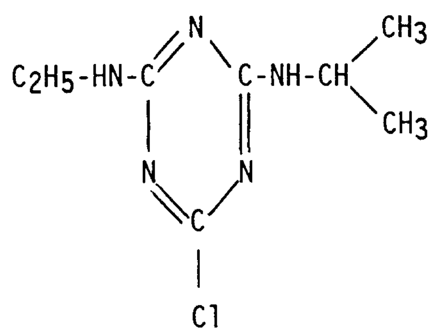

En suivant le mode opératoire décrit précédemment, on prépare quatre suspensions aqueuses selon l'invention d'atrazine ainsi qu'une suspension aqueuse d'atrazine ne comportant pas de triglycéride éthoxylé (essai comparatif A) dont les compositions respectives sont indiquées dans le tableau 1 ci-après.

Le tableau 1 indique également pour chacune des suspensions :

- le diamètre moyen des particules de la matière active (en micromètres)
- la valeur en secondes de la mesure de la vitesse d'écoulement de la suspension (avant addition de l'épaississant : gomme xanthane) selon la COUPE FORD n° 4 (CF n° 4)
- l'abréviation OE correspond au motif oxyéthylène dans la formule des triglycérides ou des acides gras éthoxylés.

L'antimousse utilisé est un polydiorganosiloxane.

Toutes les suspensions des exemples 1 à 4 ont été stables :

- plus de 2 mois à 45 °C et

- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation, ni sédimentation pendant une durée d'utilisation d'environ 24 heures.

La suspension selon l'essai comparatif est également stable au stockage, mais son broyage est difficile et on observe une floculation dans l'eau à la dilution.

TABLEAU 1

| Constituants de la suspension | Exemple 1 | Exemple 2 | Exemple 3 | Exemple 4 | Essai A |
|---|---|---|---|---|---|
| Atrazine | 500 g | 500 g | 500 g | 500 g | 500 g |
| Sucroglycérides d'huile de ricin à 10 % dans l'eau | 150 g | 80 g | 100 g | 100 g | 150 g |
| Huile de ricin éthoxylée (environ 33 OE) | 5 g | 4 g | 5 g | 5 g | 0 g |
| Huile de coprah éthoxylée (environ 27 OE) | 0 g | 0 g | 0 g | 5 g | 0 g |
| Dodécylbenzène sulfonate de sodium | 0 g | 2 g | 0 g | 0,5 g | 2 g |
| Lauryl sulfate de sodium | 2 g | 0 g | 2 g | 0 g | 0 g |
| Monopropylène-glycol | 70 g | 80 g | 70 g | 70 g | 80 g |
| Gomme xanthane à 2 % dans l'eau | 50 g | 50 g | 50 g | 50 g | 50 g |
| Antimousse | 1 g | 1 g | 1 g | 1 g | 1 g |
| Eau (quantité suffisante pour 1000 cm3) | 300 g | 450 g | 349 g | 345 g | 295 g |
| Diamètre moyen des particules (en micromètres) | 3,1 | 3,1 | 2,8 | 3,2 | — |
| CF n° 4 | 17 s | 15 s | 35 s | 22 s | — |

Exemples 5 à 8

Préparation de suspensions aqueuses d'atrazine.

En suivant le mode opératoire décrit précédemment, on prépare quatre suspensions aqueuses d'atrazine, dont les compositions respectives et les propriétés sont indiquées dans le tableau 2 ci-après (avec les mêmes abréviations que pour le tableau 1).

De même que pour les suspensions des exemples 1 à 4, toutes les suspensions des exemples 5 à 8 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation, ni sédimentation pendant une durée d'utilisation d'environ 24 heures.

| Constituants de la suspension | Exemple 5 | Exemple 6 | Exemple 7 | Exemple 8 |
|---|---|---|---|---|
| Atrazine | 500 g | 500 g | 500 g | 350 g |
| Sucroglycérides de suif à 10 % dans l'eau | 100 g | 50 g | 80 g | 50 g |
| Huile de ricin éthoxylée (environ 33 OE) | 5 g | 4 g | 0 g | 5 g |
| Huile de ricin éthoxylée (environ 18 OE) | 0 g | 0 g | 8 g | 0 g |
| Huile de coprah éthoxylée (environ 27 OE) | 0 g | 0 g | 8 g | 0 g |
| Dodécylbenzène sulfonate de sodium | 0 g | 2 g | 2 g | 0 g |
| Lauryl sulfate de sodium | 2 g | 0 g | 0 g | 2 g |
| Monopropylène-glycol | 80 g | 80 g | 80 g | 80 g |
| Gomme xanthane à 2 % dans l'eau | 50 g | 50 g | 40 g | 60 g |
| Antimousse | 1 g | 1 g | 1 g | 1 g |
| Eau (quantité suffisante pour 1000 cm3) | 338 g | 388 g | 354 g | 505 g |
| Diamètre moyen des particules (en micromètres) | 2,8 | 3,1 | 3,4 | 3,2 |
| CF n° 4 | 33 s | 20 s | 40 s | 10 s |

Tableau 2

Exemples 9 à 11

Préparation de suspensions aqueuses d'atrazine.

En suivant le mode opératoire décrit précédemment, on prépare trois suspensions aqueuses d'atrazine, dont les compositions respectives et les propriétés sont indiquées dans le tableau 3 ci-après (avec les mêmes abréviations que pour le tableau 1).

De même que pour les suspensions des exemples 1 à 4, toutes les suspensions des exemples 9 à 11 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation, ni sédimentation pendant une durée d'utilisation d'environ 24 heures.

| Constituants de la suspension | Exemple 9 | Exemple 10 | Exemple 11 |
|---|---|---|---|
| Atrazine | 500 g | 450 g | 500 g |
| Sucroglycérides de coprah à 10 % dans l'eau | 100 g | 0 g | 0 g |
| Sucroglycérides de beurre à 10 % dans l'eau | 0 g | 100 g | 0 g |
| Sucroglycérides de suif à 10 % dans l'eau | 0 g | 0 g | 250 g |
| Huile de ricin éthoxylée (environ 33 OE) | 5 g | 5 g | 5 g |
| Dodécylbenzène sulfonate de sodium | 2 g | 2 g | 2 g |
| Monopropylène-glycol | 80 g | 80 g | 60 g |
| Gomme xanthane à 2 % dans l'eau | 50 g | 50 g | 50 g |
| Antimousse | 1 g | 1 g | 1 g |
| Eau (quantité suffisante pour 1000 cm3) | 338 g | 380 g | 208 g |
| Diamètre moyen des particules (en micromètres) | 3,0 | 3,3 | 3,5 |
| CF n° 4 | 20 s | 15 s | 17 s |

Tableau 3

Exemples 12 à 15

Préparation de suspensions aqueuses de diuron.

Le diuron est un herbicide connu, ayant un point de fusion de 158 °C et une solubilité dans l'eau à 25 °C de 0,042 g/l :

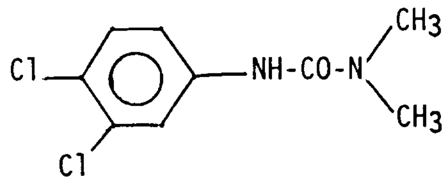

En suivant le mode opératoire décrit précédemment, on prépare quatre suspensions aqueuses selon l'invention de diuron dont les compositions respectives sont indiquées dans le tableau 4 ci-après (avec les mêmes abréviations que pour le tableau 1).

De même que pour les suspensions des exemples 1 à 4, toutes les suspensions des exemples 12 à 15 ont été stables :

- plus de 2 mois à 45 °C et
- plus de 2 mois en cycle de températures : 24 heures à + 45 °C, 24 heures à - 5 °C.

Par dilution à l'eau, elles ont conduit à des suspensions de 0,5 % à 2 % de matière active, sans floculation, ni sédimentation pendant une durée d'utilisation d'environ 24 heures.

| Constituants de la suspension | Exemple 12 | Exemple 13 | Exemple 14 | Exemple 15 |
|---|---|---|---|---|
| Diuron | 600 g | 600 g | 600 g | 550 g |
| Sucroglycérides d'huile de ricin à 10 % dans l'eau | 100 g | 150 g | 150 g | 100 g |
| Huile de ricin éthoxylée (environ 33 OE) | 5 g | 8 g | 11 g | 5 g |
| Nonylphénol éthoxypropoxylé | 0 g | 0 g | 0 g | 2 g |
| Nonylphénol éthoxylé (environ 12 OE) | 0 g | 3 g | 0 g | 0 g |
| Nonylphénol éthoxylé (environ 8 OE) | 5 g | 0 g | 0 g | 0 g |
| Nonylphénol éthoxylé (environ 10E) | 0 g | 0 g | 3 g | 3 g |
| Sodiosulfo-succinate de dioctyle | 0 g | 0 g | 1 g | 0 g |
| Monopropylène-glycol | 70 g | 70 g | 70 g | 70 g |
| Gomme xanthane à 2 % dans l'eau | 50 g | 50 g | 50 g | 50 g |
| Antimousse | 1 g | 1 g | 1 g | 1 g |
| Eau (quantité suffisante pour 1000 cm3) | 370 g | 318 g | 314 g | 402 g |
| Diamètre moyen des particules (en micromètres) | 3,8 | 3,7 | 3,5 | 3,3 |
| CF n° 4 | 35 s | 30 s | 28 s | 27 s |

TABLEAU 4

Exemples 16 à 20

Préparation de suspensions aqueuses de diuron.

En suivant le mode opératoire décrit précédemment, on prépare cinq suspensions aqueuses selon l'invention de diuron dont les compositions respectives sont indiquées dans le tableau 5 ci-après (avec les mêmes abréviations que pour le tableau 1).

De même que pour les suspensions des exemples 1 à 4, toutes les suspensions des exemples 16 à 20 ont été stables :

- plus de 2 mois à 45 ° C et
- plus de 2 mois en cycle de températures : 24 heures à + 45 ° C, 24 heures à - 5 ° C.

Par dilution à l'eau, elles ont conduit à des suspensions de 0,5 % à 2 % de matière active, sans floculation, ni sédimentation pendant une durée d'utilisation d'environ 24 heures.

| Constituants de la suspension | Exemple 16 | Exemple 17 | Exemple 18 | Exemple 19 | Exemple 20 |
|---|---|---|---|---|---|
| Diuron | 600 g | 580 g | 640 g | 640 g | 640 g |
| Sucroglycérides d'huile de coprah à 10 % dans l'eau | 150 g | 145 g | 140 g | 140 g | 140 g |
| Huile de ricin éthoxylée (environ 33 OE) | 5 g | 0 g | 0 g | 5 g | 5 g |
| Huile de ricin éthoxylée (environ 18 OE) | 0 g | 5 g | 5 g | 0 g | 0 g |
| Nonylphénol éthoxylé (environ 10 OE) | 5 g | 3 g | 4 g | 5 g | 3 g |
| Alcool gras en C11 éthoxylé (environ 7 OE) | 0 g | 0 g | 0 g | 0 g | 5 g |
| Dodécylbenzène sulfonate de sodium | 3 g | 3 g | 2 g | 0 g | 0 g |
| Sodiosulfo-succinate de dioctyle | 0 g | 0 g | 0 g | 2 g | 0 g |
| Monopropylène-glycol | 70 g | 70 g | 60 g | 60 g | 60 g |
| Gomme xanthane à 2 % dans l'eau | 50 g | 50 g | 40 g | 40 g | 40 g |
| Antimousse | 1 g | 1 g | 1 g | 1 g | 1 g |
| Eau (quantité suffisante pour 1000 cm3) | 316 g | 336 g | 321 g | 320 g | 319 g |
| Diamètre moyen des particules (en micromètres) | 3,5 | 3,6 | 3,8 | 3,7 | 3,5 |
| CF n° 4 | 30 s | 35 s | 40 s | 40 s | 38 s |

TABLEAU 5

Exemples 21 et 22

Préparation de suspensions aqueuses de diuron.

En suivant le mode opératoire décrit précédemment, on prépare deux suspensions aqueuses selon l'invention de diuron dont les compositions respectives sont indiquées dans le tableau 6 ci-après (avec les mêmes abréviations que pour le tableau 1).

De même que pour les suspensions des exemples 1 à 4, toutes les suspensions des exemples 21 et 22 ont été stables :

- plus de 2 mois à 45 ° C et
- plus de 2 mois en cycle de températures : 24 heures à + 45 ° C, 24 heures à - 5 ° C.

Par dilution à l'eau, elles ont conduit à des suspensions de 0,5 % à 2 % de matière active, sans floculation, ni sédimentation pendant une durée d'utilisation d'environ 24 heures.

| Constituants de la suspension | Exemple 21 | Exemple 22 |
|---|---|---|
| Diuron | 430 g | 450 g |
| Sucroglycérides d'huile de coprah à 10 % dans l'eau | 120 g | 0 g |
| Sucroglycérides d'huile de beurre à 10 % dans l'eau | 0 g | 100 g |
| Huile de ricin éthoxylée (environ 33 OE) | 5 g | 10 g |
| Huile de ricin éthoxylée (environ 18 OE) | 5 g | 0 g |
| Dodécylbenzène sulfonate de sodium | 5 g | 5 g |
| Monopropylène-glycol | 70 g | 70 g |
| Gomme xanthane à 2 % dans l'eau | 60 g | 60 g |
| Antimousse | 1 g | 1 g |
| Eau (quantité suffisante pour 1000 cm3) | 447 g | 455 g |
| Diamètre moyen des particules (en micromètres) | 3,2 | 3,5 |
| CF n° 4 | 10 s | 12 s |

TABLEAU 6

Exemples 23 et 24

Préparation de suspensions aqueuses de triflumizole.

Le triflumizole est un fongicide connu, ayant un point de fusion de 63 ° C et une solubilité dans l'eau à 25 ° C de 0,012 g/l :

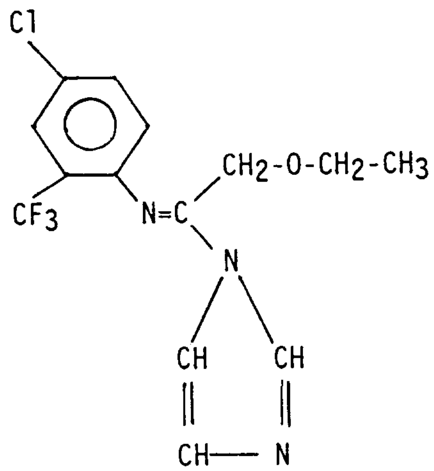

En suivant le mode opératoire décrit précédemment, on prépare deux suspensions aqueuses selon l'invention de triflumizole dont les compositions respectives sont indiquées dans le tableau 7 ci-après (avec les mêmes abréviations que pour le tableau 1).

De même que pour les suspensions des exemples 1 à 4, toutes les suspensions des exemples 23 et 24 ont été stables :

- plus de 2 mois à une température inférieure à 35 ° C (température limite de stabilité de la matière active).

Par dilution à l'eau, elles ont conduit à des suspensions de 0,5 % à 2 % de matière active, sans floculation, ni sédimentation pendant une durée d'utilisation d'environ 24 heures.

| Constituants de la suspension | Exemple 23 | Exemple 24 |
|---|---|---|
| Triflumizole | 430 g | 500 g |
| Sucroglycérides de suif à 10 % dans l'eau | 130 g | 0 g |
| Sucroglycérides d'huile de ricin à 10 % dans l'eau | 0 g | 200 g |
| Huile de ricin éthoxylée (environ 33 OE) | 8 g | 20 g |
| Dodécylbenzène sulfonate de sodium | 3 g | 0 g |
| Lauryl sulfate de sodium | 0 g | 3 g |
| Monopropylène-glycol | 60 g | 70 g |
| Gomme xanthane à 2 % dans l'eau | 50 g | 50 g |
| Antimousse | 1 g | 1 g |
| Eau (quantité suffisante pour 1000 cm3) | 374 g | 220 g |
| Diamètre moyen des particules (en micromètres) | 4,2 | 4,5 |
| CF n° 4 | 39 s | 46 s |

TABLEAU 7

EXEMPLE 25

Préparation de 1000 $cm^3$ de suspension aqueuse d'isoproturon

On mélange 60 g de monopropylèneglycol, 20 g de méthylnaphtalène sulfonate de sodium condensé au formol et 5 g de nonylphénol éthoxylé (10 OE).

On ajoute lentement sous agitation 650 g d'isoproturon ainsi que 436 g d'eau et 5 g d'antimousse polydiorganosiloxanique.

La pré-dispersion est broyée dans un broyeur à billes (billes de verre d'un mm de diamètre ; 4000 tours/min) jusqu'à obtention d'une granulométrie moyenne de la matière active de 5 micromètres.

On suit l'évolution du diamètre des particules à l'aide d'un granulomètre.

La vitesse d'écoulement de la suspension selon la COUPE FORD N° 4 est de 19 s.

EXEMPLE 26

Préparation de 1000 $cm^3$ de suspension aqueuse d'atrazine

On mélange 60 g de monopropylèneglycol, 35 g d'esters phosphoriques (mono- et di-) du tristyrylphénol éthoxylé (16 OE) neutralisés par la triéthanolamine et 5 g de nonylphénol éthoxylé (10 OE).

On ajoute lentement sous agitation 600 g d'atrazine ainsi que 390 g d'eau et 5 g d'antimousse polydiorganosiloxanique.

La pré-dispersion est broyée dans un broyeur à billes (billes de verre d'un mm de diamètre ; 4000 tours/min) jusqu'à obtention d'une granulométrie moyenne de la matière active de 3,5 micromètres.

On suit l'évolution du diamètre des particules à l'aide d'un granulomètre.

La vitesse d'écoulement de la suspension selon la COUPE FORD N° 4 est de 22 s.

EXEMPLES DE PREPARATION D'EMULSIONS

EXEMPLE 27

Dans 560 g d'huile de colza, on introduit :

- 18,65 g de sucroglycérides d'huile de colza
- 18,65 g d'huile de coprah éthoxylée (environ 27 OE)
- 18,65 g d'huile de ricin éthoxylée (environ 18 OE).

Le mélange est homogénéisé. Ce mélange est coulé lentement dans 295 g d'un mélange eau/monopropylène-glycol (respectivement 83,4 % et 16,6 % en poids/poids) sous agitation (800 tours/min).

On obtient une émulsion huile dans eau.

Cette émulsion est ensuite homogénéisée à l'aide d'une turbine à 8000 tours/min pendant 3 min environ.

On obtient une émulsion stable huile dans eau ayant les caractéristiques suivantes :

- taille moyenne 1,31 micromètre,
- viscosité 500 mPa.s.

Cette émulsion est stabilisée par l'addition de 30 g d'une solution à 2 % de gomme xanthane.

On obtient ainsi 1000 $cm^3$ d'une émulsion aqueuse ayant la composition suivante :

| | |
|---|---|
| - huile de colza | 560 g |
| - sucroglycérides d'huile de colza | 18,65 g |
| - huile de coprah éthoxylée (environ 27 OE) | 18,65 g |
| - huile de ricin éthoxylée (environ 18 OE) | 18,65 g |
| - monopropylène-glycol | 49 g |
| - gomme xanthane à 2 % dans l'eau | 30 g |
| - eau | 246 g |

L'émulsion a été stable :

- plus de 2 mois à 45 °C et
- plus de 2 mois en cycle de températures : 24 heures à + 45 °C, 24 heures à - 5 °C.

EXEMPLES 28 à 31

Dans un mélange eau/monopropylène-glycol (respectivement 83,4 % et 16,6 % en poids/poids), on coule lentement sous agitation (800 tours/min) le sucroglycéride d'huile de ricin, puis de l'huile de de colza, ou un mélange huile de colza/sucroglycérides d'huile de colza ou un mélange huile de colza/lécithine brute de soja.

On obtient une émulsion huile dans eau.

Cette émulsion est ensuite homogénéisée à l'aide d'une turbine à 8000 tours/min pendant 3 min environ.

Cette émulsion est stabilisée par l'addition de 30 g d'une solution à 2 % de gomme xanthane.

On obtient 1000 $cm^3$ d'une émulsion stable huile dans eau dont les caractéristiques sont indiquées dans le tableau 8 ci-après (la viscosité est mesurée avant l'addition de la gomme xanthane).

L'émulsion a été stable :

- plus de 2 mois à 45 ° C et
- plus de 2 mois en cycle de températures : 24 heures à + 45 ° C, 24 heures à - 5 ° C.

| Constituants de l'émulsion | Exemple 28 | Exemple 29 | Exemple 30 | Exemple 31 |
|---|---|---|---|---|
| Huile de colza | 560 g | 560 g | 560 g | 560 g |
| Sucroglycérides d'huile de ricin | 56 g | 28 g | 14 g | 14 g |
| Sucroglycérides d'huile de colza | 0 g | 28 g | 14 g | 0 g |
| Lécithine brute de soja | 0 g | 0 g | 0 g | 14 g |
| Monopropylène-glycol | 49 g | 49 g | 52 g | 52 g |
| Gomme xanthane à 2 % dans l'eau | 30 g | 30 g | 30 g | 30 g |
| Eau (quantité suffisante pour 1000 cm3) | 246 g | 246 g | 268 g | 268 g |
| Taille moyenne (en micromètres) | 1,98 | 1,59 | 2,57 | 2,36 |
| Viscosité (en mPa.s) | 660 | 975 | 570 | 970 |

Tableau 8

EXEMPLES 32 et 33

Dans 380 g d'huile de colza, on introduit 26,6 g soit de sucroglycérides de suif, soit de sucroglycérides d'huile de colza et 11,4 g de lécithine brute de soja.

Le mélange est homogénéisé. Dans ce mélange sont coulés lentement :

- 342 g d'un mélange eau/monopropylène-glycol (respectivement 82,35 % et 17,65 % en poids/poids) sous agitation (800 tours/min),
- puis 167,3 g d'eau sous forte agitation (8000 tours/min).

L'émulsion de l'exemple 32 est stabilisée par l'addition de 30 g d'une solution à 2 % de gomme xanthane.

On obtient 1000 $cm^3$ d'une émulsion stable huile dans eau ayant les caractéristiques indiquées dans le tableau 9 ci-après (la viscosité est mesurée avant l'addition de la gomme xanthane).

Chaque émulsion a été stable :

- plus de 2 mois à 45 °C et
- plus de 2 mois en cycle de températures : 24 heures à + 45 °C, 24 heures à - 5 °C.

| Constituants de l'émulsion | Exemple 32 | Exemple 33 |
|---|---|---|
| Huile de colza | 380 g | 380 g |
| Sucroglycérides de suif | 26,6 g | 0 g |
| Sucroglycérides d'huile de colza | 0 g | 26,6 g |
| Lécithine brute de soja | 11,4 g | 11,4 g |
| Monopropylène-glycol | 60,4 g | 60,4 g |
| Gomme xanthane à 2 % dans l'eau | 30 g | 0 g |
| Eau (quantité suffisante pour 1000 cm3) | 449 g | 479 g |
| Taille moyenne (en micromètres) | 2,45 | 2,3 |
| Viscosité (en mPa.s) | 90 | 75 |

Tableau 9

EXEMPLE 34

Dans 560 g d'huile de soja on introduit :

- 18,65 g de sucroglycérides d'huile de colza
- 18,65 g d'huile de coprah éthoxylée (environ 27 OE)
- 18,65 g d'huile de ricin éthoxylée (environ 18 OE).

Le mélange est homogénéisé. Ce mélange est coulé lentement dans 295 g d'un mélange eau/monopropylène-glycol (respectivement 83,4 % et 16,6 % en poids/poids) sous agitation (800 tours/min).

On obtient une émulsion huile dans eau.

Cette émulsion est ensuite homogénéisée à l'aide d'une turbine à 8000 tours/min pendant 3 min environ.

On obtient une émulsion stable huile dans eau ayant les caractéristiques suivantes :

- taille moyenne 1,30 micromètre,
- viscosité 500 mPa.s.

Cette émulsion est stabilisée par l'addition de 30 g d'une solution à 2 % de gomme xanthane.

On obtient ainsi 1000 $cm^3$ d'une émulsion aqueuse ayant la composition suivante :

| | |
|---|---|
| - huile de soja | 560 g |
| - sucroglycérides d'huile de colza | 18,65 g |
| - huile de coprah éthoxylée (environ 27 OE) | 18,65 g |
| - huile de ricin éthoxylée (environ 18 OE) | 18,65 g |
| - monopropylène-glycol | 49 g |
| - gomme xanthane à 2 % dans l'eau | 30 g |
| - eau | 246 g |

L'émulsion a été stable :

- plus de 2 mois à 45°C et
- plus de 2 mois en cycle de températures : 24 heures à + 45°C, 24 heures à - 5°C.

EXEMPLES 35 à 70

Préparation de suspo-émulsions à partir des suspensions aqueuses et des émulsions aqueuses des exemples précédents

A partir respectivement d'une suspension aqueuse et d'une émulsion aqueuse obtenues dans les exemples précédents, on prépare par simple mélangeage différentes suspo-émulsions.

Les volumes relatifs de suspension et d'émulsion sont indiqués dans le tableau 10 ci-après.

Chaque suspo-émulsion obtenue a été stable :

- plus de 2 mois à 45°C et

- plus de 2 mois en cycle de températures : 24 heures à + 45 °C, 24 heures à - 5 °C.

| SUSPO-EMULSION | SUSPENSION UTILISEE | EMULSION UTILISEE |
|---|---|---|
| Exemple 35 | 50 cm3 de l'exemple 25 | 50 cm3 de l'exemple 28 |
| Exemple 36 | 50 cm3 de l'exemple 25 | 100 cm3 de l'exemple 28 |
| Exemple 37 | 100 cm3 de l'exemple 25 | 50 cm3 de l'exemple 28 |
| Exemple 38 | 50 cm3 de l'exemple 25 | 50 cm3 de l'exemple 31 |
| Exemple 39 | 50 cm3 de l'exemple 25 | 100 cm3 de l'exemple 31 |
| Exemple 40 | 100 cm3 de l'exemple 25 | 50 cm3 de l'exemple 31 |
| Exemple 41 | 50 cm3 de l'exemple 26 | 50 cm3 de l'exemple 27 |
| Exemple 42 | 50 cm3 de l'exemple 26 | 100 cm3 de l'exemple 27 |
| Exemple 43 | 100 cm3 de l'exemple 26 | 50 cm3 de l'exemple 27 |
| Exemple 44 | 50 cm3 de l'exemple 26 | 50 cm3 de l'exemple 32 |
| Exemple 45 | 50 cm3 de l'exemple 26 | 100 cm3 de l'exemple 32 |
| Exemple 46 | 100 cm3 de l'exemple 26 | 50 cm3 de l'exemple 32 |
| Exemple 47 | 50 cm3 de l'exemple 1 | 50 cm3 de l'exemple 28 |
| Exemple 48 | 50 cm3 de l'exemple 1 | 100 cm3 de l'exemple 28 |
| Exemple 49 | 100 cm3 de l'exemple 1 | 50 cm3 de l'exemple 28 |
| Exemple 50 | 50 cm3 de l'exemple 1 | 50 cm3 de l'exemple 31 |
| Exemple 51 | 50 cm3 de l'exemple 1 | 100 cm3 de l'exemple 31 |
| Exemple 52 | 100 cm3 de l'exemple 1 | 50 cm3 de l'exemple 31 |

<u>Tableau 10 (début)</u>

| SUSPO-EMULSION | SUSPENSION UTILISEE | EMULSION UTILISEE |
|---|---|---|
| Exemple 53 | 50 cm3 de l'exemple 9 | 50 cm3 de l'exemple 29 |
| Exemple 54 | 50 cm3 de l'exemple 9 | 100 cm3 de l'exemple 29 |
| Exemple 55 | 100 cm3 de l'exemple 9 | 50 cm3 de l'exemple 29 |
| Exemple 56 | 50 cm3 de l'exemple 9 | 50 cm3 de l'exemple 30 |
| Exemple 57 | 50 cm3 de l'exemple 9 | 100 cm3 de l'exemple 30 |
| Exemple 58 | 100 cm3 de l'exemple 9 | 50 cm3 de l'exemple 30 |
| Exemple 59 | 50 cm3 de l'exemple 15 | 50 cm3 de l'exemple 28 |
| Exemple 60 | 50 cm3 de l'exemple 15 | 100 cm3 de l'exemple 28 |
| Exemple 61 | 100 cm3 de l'exemple 15 | 50 cm3 de l'exemple 28 |
| Exemple 62 | 50 cm3 de l'exemple 15 | 50 cm3 de l'exemple 31 |
| Exemple 63 | 50 cm3 de l'exemple 15 | 100 cm3 de l'exemple 31 |
| Exemple 64 | 100 cm3 de l'exemple 15 | 50 cm3 de l'exemple 31 |
| Exemple 65 | 50 cm3 de l'exemple 21 | 50 cm3 de l'exemple 32 |
| Exemple 66 | 50 cm3 de l'exemple 21 | 100 cm3 de l'exemple 32 |
| Exemple 67 | 100 cm3 de l'exemple 21 | 50 cm3 de l'exemple 32 |
| Exemple 68 | 50 cm3 de l'exemple 21 | 50 cm3 de l'exemple 27 |
| Exemple 69 | 50 cm3 de l'exemple 21 | 100 cm3 de l'exemple 27 |
| Exemple 70 | 100 cm3 de l'exemple 21 | 50 cm3 de l'exemple 27 |

Tableau 10 (fin)

## Revendications

**Revendications pour les Etats contractants suivants : AT, BE, CH, DE, DK, FR, GB, GR, IT, LI, LU, NL, SE**

1. Suspo-émulsion de matière active phytosanitaire solide, de point de fusion supérieur ou égal à 45 °C et de solubilité dans l'eau à 20 °C inférieure à 5 g/litre , caractérisée en ce gu'elle comporte au moins une huile, un système tensio-actif comprenant au moins des sucroglycérides, ladite matière active et, soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

2. Suspo-émulsion de matière active selon la revendication 1, caractérisée en ce qu'elle est susceptible d'être obtenue par mélangeage :

- d'une émulsion aqueuse d'au moins une huile contenant un système tensio-actif comprenant au moins des sucroglycérides,
- avec une suspension aqueuse de ladite matière active, comprenant au moins soit un tensio-actif non-ionique et/ou anionique, soit un système tensio-actif comprenant des sucroglycérides, un triglycéride alcoxylé et/ou un acide gras alcoxylé et/ou un ester de sorhitan et/ou un ester de sorbitan alcoxylé.

**3.** Suspo-émulsion de matière active selon l'une des revendications 1 ou 2, caractérisée en ce qu'elle est susceptible d'être obtenue par mélangeage :
- d'une émulsion aqueuse d'au moins une huile contenant un système tensio-actif comprenant au moins des sucroglycérides,
- avec une suspension aqueuse de ladite matière active, comprenant au moins soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé et un agent mouillant.

**4.** Suspo-émulsion selon l'une des revendications 1 à 3, caractérisée en ce que les sucroglycérides sont préparés par transestérification de triglycérides, de préférence naturels, par le saccharose.

**5.** Suspo-émulsion selon la revendication 4, caractérisée en ce que les triglycérides naturels sont choisis parmi le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

**6.** Suspo-émulsion selon l'une des revendications 1 à 5, caractérisée en ce que les sucroglycérides utilisés proviennent de l'huile de palme, du saindoux, de l'huile de coprah, du suif, de l'huile de colza, l'huile de ricin.

**7.** Suspo-émulsion selon l'une des revendications 2 à 6, caractérisée en ce que l'émulsion aqueuse contient un phospholipide choisi parmi les lécithines brutes d'origine végétale ou animale, telles que la lécithine de soja, la lécithine du jaune d'oeuf ainsi que toute fraction de lécithine.

**8.** Suspo-émulsion selon l'une des revendications 1 à 7, caractérisée en ce que l'huile est choisie parmi l'huile de colza, l'huile de tournesol, l'huile de palme, l'huile d'arachide, l'huile de lin, l'huile de coprah, l'huile de pépins de raisin, l'huile de noix, l'huile de poisson, l'oléate de méthyle et de préférence l'huile de colza, l'huile de tournesol, l'huile de soja et l'oléate de méthyle.

**9.** Suspo-émulsion selon l'une des revendications 2 à 8, caractérisée en ce que l'émulsion aqueuse comporte, en poids par rapport au volume total de l'émulsion :
- de 0,2 % à 15 % de sucroglycérides,
- de 0 % à 8 % de phospholipide,
- de 5 % à 70 % d'huile,

et de préférence :
- de 0,5 % à 10 % de sucroglycérides,
- de 0 % à 5 % de phospholipide,
- de 10 % à 60 % d'huile.

**10.** Suspo-émulsion selon l'une des revendications 2 à 9, caractérisée en ce que l'émulsion aqueuse comporte des triglycérides alcoxylés et/ou des acides gras alcoxylés et/ou des esters de sorbitan et/ou des esters de sorbitan alcoxylés, plus particulièrement choisis parmi les triglycérides éthoxylés, les acides gras éthoxylés, les esters de sorbitan et les esters de sorbitan éthoxylés.

**11.** Suspo-émulsion selon la revendication 10, caractérisée en ce que les triglycérides éthoxylés sont des triglycérides d'origine végétale ou animale, tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco, éthoxylés.

**12.** Suspo-émulsion selon la revendication 10, caractérisée en ce que les acides gras éthoxylés sont des esters d'acides gras, tels que l'acide oléïque ou l'acide stéarique, éthoxylés.

**13.** Suspo-émulsion selon la revendication 10, caractérisée en ce que les esters de sorbitan sont des esters du sorbitol cyclisé d'acides gras de $C_{10}$ à $C_{20}$ comme l'acide laurique, l'acide stéarique ou l'acide oléïque.

**14.** Suspo-émulsion selon l'une des revendications 2 à 13, caractérisée en ce que l'émulsion aqueuse comporte de 0 à 10 % en poids, et de préférence de 0,2 % à 6 % en poids, de triglycérides alcoxylés et/ou d'acides gras alcoxylés et/ou d'esters de sorbitan et/ou d'esters de sorbitan alcoxylés par volume total de l'émulsion.

**15.** Suspo-émulsion selon l'une des revendications 1 à 14, caractérisée en ce que la matière active phytosanitaire est choisie parmi :

- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,
- l'isoproturon,
- la simazine,
- l'améthryne,
- le phenmdipham,
- le pendiméthalin.

**16.** Suspo-émulsion selon l'une des revendications 1 à 15, caractérisée en ce que la suspension aqueuse de matière active comporte un tensio-actif non-ionique choisi parmi :

- les di(phényl-1 éthyl) phénols alcoxylés,
- les tri(phényl-1 éthyl) phénols alcoxylés,
- les alkylphénols alcoxylés,
- les amines grasses alcoxylées,
- les alcools gras alcoxylés,
- les huiles de ricin alcoxylées,
- les polymères séquencés oxyde d'éthylène-oxyde de propylène (OE-OP) ou oxyde d'éthylène-oxyde de propylène-oxyde d'éthylène (OE-OP-OE).

**17.** Suspo-émulsion selon la revendication 16, caractérisée en ce que les motifs alcoxyles de ces tensio-actifs sont des motifs oxyéthylène et/ou oxypropylène, dont le nombre varie de 2 à 100 et de préférence de 4 à 50.

**18.** Suspo-émulsion selon l'une des revendications 16 ou 17, caractérisée en ce que le tensio-actif non-ionique est choisi parmi :

- le di(phényl-1 éthyl)phénol éthoxylé avec 15 motifs oxyde d'éthylène (OE),
- le tri(phényl-1 éthyl)phénol éthoxylé avec 16 motifs OE,
- le tri(phényl-1 éthyl)phénol éthoxylé avec 25 motifs OE,
- le tri(phényl-1 éthyl)phénol éthoxylé avec 40 motifs OE,
- les tri(phényl-1 éthyl)phénols éthoxy-propoxylés,
- les nonylphénols éthoxy-propoxylés,
- les polymères triséquencés OE-OP-OE.

**19.** Suspo-émulsion selon l'une des revendications 1 à 15, caractérisée en ce que la suspension aqueuse de matière active comporte un tensio-actif anionique choisi parmi :
- les esters phosphoriques des alkylphénols éthoxylés, des di(phényl-1 éthyl)phénols éthoxylés, des tri(phényl-1 éthyl)phénols éthoxylés, des alcools gras éthoxylés ;
- les esters sulfuriques des alkylphénols éthoxylés, des di(phényl-1 éthyl)phénols éthoxylés, des tri(phényl-1 éthyl)phénols éthoxylés, des alcools gras éthoxylés ;
- les esters sulfoniques des alkylphénols éthoxylés, des di(phényl-1 éthyl)phénols éthoxylés, des tri(phényl-1 éthyl)phénols éthoxylés ;
- les sels des acides polycarboxyliques, les homo- et copolymères d'acides polycarboxyliques (comme les acides polyacryliques et polyméthacryliques), les copolymères à base d'anhydride maléïque et de diisobutylène ;
- les alkylnaphtalène-sulfonates, les poly(alkylnaphtalène-sulfonates) ;
- les dihydroxydiphényl-sulfonates condensés avec le formol.

**20.** Suspo-émulsion selon la revendication 19, caractérisée en ce que le tensio-actif anionique est choisi parmi :
- les sels de triéthanolamine des mono- et diester phosphoriques du tri(phényl-1 éthyl)phénol éthoxylé avec 16 motifs OE,
- le sulfate acide du di(phényl-1 éthyl)phénol éthoxylé avec 11 motifs OE,
- le phosphate acide de nonylphénol éthoxylé avec 9 motifs OE,
- le méthylnaphtalène-sulfonate de sodium,
- le sel de sodium de l'acide polyacrylique.

**21.** Suspo-émulsion selon l'une des revendications 2 à 20, caractérisée en ce que la suspension aqueuse de la matière active comporte de 5 % à 90 % en poids de matière active, par rapport au volume total de la suspension et de préférence de 10 % à 85 % en poids/volume.

**22.** Suspo-émulsion selon la revendication 21, caractérisée en ce que la suspension aqueuse de la matière active comporte de 0,2 % à 15 % en poids de tensio-actif non-ionique et/ou anionique, et de préférence de 0,5 % à 10 % en poids par rapport au volume total de la suspension aqueuse.

**23.** Suspo-émulsion selon la revendication 21, caractérisée en ce que la suspension aqueuse de la matière active comporte de
- 0,1 % à 5 % en poids de sucroglycérides et de phospholipide, et de préférence de 0,2 % à 4 %,
- 0,1 % à 3 % en poids de triglycéride alcoxylé et/ou d'acide gras alcoxylé et/ou d'ester de sorbitan et/ou d'ester de sorbitan alcoxylé tels que définis précédemment, et de préférence de 0,2 % à 2,8 %,
- 0,05 % à 1 % en poids d'un agent mouillant, et de préférence de 0,1 % à 0,8 %,

par rapport au volume total de la suspension aqueuse.

**24.** Suspo-émulsion selon la revendication 23, caractérisée en ce que l'agent mouillant est choisi parmi les sels anioniques de tensio-actifs, les alcools alcoxylés ou les alkylphénols alcoxylés représentés par les formules suivantes :

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :
- $R_1$ représente
  . un radical alkylphényle (tel que dodécylphényle),
  . un radical alkyle (tel que dodécyle),
  . un radical bis(octyloxycarbonyl)-1,2 éthyle, (de préférence bis(éthyl-2 hexyloxycarbonyl)-1,2 éthyle,
- $R_2$ représente

. un radical alkyle (tel que dodécyle),
. un radical alkylphénol éthoxylé (tel que nonylphénol éthoxylé avec 2 à 50 motifs OE),
. un radical alkyle éthoxylé,

- $R_3$ représente
  . un radical alkylaryle (tel que nonylphényle, alkylnaphtyle),
  . un radical alkyle ayant 8 à 20 atomes de carbone, et de préférence de 10 à 14 atomes de carbone,
- n est un nombre de 4 à 12,
- $R_4$ représente un radical alkyle ayant 10 à 22 atomes de carbone,
- M représente Na, K, $NH_4$ ou un cation triéthanolammonium.

**25.** Suspo-émulsion selon la revendication 23, caractérisée en ce que l'agent mouillant est choisi parmi les tensio-actifs à base de silicone tels que des copolymères de polydiméthylsiloxane et soit d'homopolymère d'éthylène-glycol, soit de copolymère d'éthylène-glycol et de propylène-glycol.

**26.** Suspo-émulsion selon la revendication 23, caractérisée en ce que l'agent mouillant est choisi parmi les tensio-actifs fluorés tels que des composés comportant une chaîne linéaire perfluorocarbonée, hydrophobe et oléophobe, et une partie hydrophile comportant un groupement sulfonique, acide ou neutralisé, un groupement carboxylique, un reste alcool éthoxylé.

**27.** Suspo-émulsion selon la revendication 23, caractérisée en ce que dans la suspension aqueuse de matière active le rapport pondéral sucroglycérides/phospholipide est de 0 à 3.

**28.** Suspo-émulsion selon l'une des revendications 1 à 27, caractérisée en ce que les proportions de suspension aqueuse et d'émulsion aqueuse sont telles que la suspo-émulsion contient de 5 % à 60 % en poids de matière active, par rapport à son volume total.

**29.** Suspo-émulsion selon l'une des revendications 1 à 28, caractérisée en ce que les proportions de suspension et d'émulsion sont telles que la suspo-émulsion contient de 0,1 % à 12 % en poids de tensio-actif non-ionique et/ou anionique par rapport à son volume total.

**30.** Suspo-émulsion selon l'une des revendications 1 à 29, caractérisée en ce que les proportions de suspension et d'émulsion sont telles que la suspo-émulsion contient de 0,2 % à 15 % en poids de sucroglycérides par rapport à son volume total.

**31.** Suspo-émulsion selon l'une des revendications 1 à 30, caractérisée en ce que les proportions de suspension et d'émulsion sont telles que la suspo-émulsion contient de 0 % à 6 % en poids de phospholipide par rapport à son volume total.

**32.** Suspo-émulsion selon l'une des revendications 1 à 31, caractérisée en ce que les proportions de suspension et d'émulsion sont telles que la suspo-émulsion contient de 0,1 % à 5 % en poids de triglycéride alcoxylé et/ou d'acide gras alcoxylé et/ou d'ester de sorbitan et/ou d'ester de sorbitan alcoxylé par rapport à son volume total.

**33.** Suspo-émulsion selon l'une des revendications 1 à 32, caractérisée en ce que les proportions de suspension et d'émulsion sont telles que la suspo-émulsion contient de 0,05 % à 0,7 % en poids d'agent mouillant par rapport à son volume total.

**34.** Suspo-émulsion selon l'une des revendications 1 à 33, caractérisée en ce que les proportions de suspension et d'émulsion sont telles que la suspo-émulsion contient de 3 % à 50 % en poids d'huile par rapport à son volume total.

**Revendications pour l'Etat contractant suivant : ES**

**1.** Procédé de traitement des plantes, caractérisé en ce que l'on utilise, éventuellement après dilution par l'eau, une suspo-émulsion de matière active phytosanitaire solide, de point de fusion supérieur ou égal à 45 °C et de solubilité dans l'eau à 20 °C inférieure à 5 g/litre comportant au moins une huile, un système tensio-actif comprenant au moins des sucroglycérides, ladite matière active et, soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

**2.** Procédé selon la revendication 1, caractérisé en ce que la suspo-émulsion est susceptible d'être obtenue par mélangeage :
- d'une émulsion aqueuse d'au moins une huile contenant un système tensio-actif comprenant au moins des sucroglycérides,
- avec une suspension aqueuse de ladite matière active, comprenant au moins soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé.

**3.** Procédé selon l'une des revendications 1 ou 2, caractérisé en ce que la suspo-émulsion est susceptible d'être obtenue par mélangeage :
- d'une émulsion aqueuse d'au moins une huile contenant un système tensio-actif comprenant au moins des sucroglycérides,
- avec une suspension aqueuse de ladite matière active, comprenant au moins soit un tensio-actif non-ionique et/ou anionique, soit un système tensio-actif comprenant des sucroglycérides, un triglycéride alcoxylé et/ou un acide gras alcoxylé et/ou un ester de sorbitan et/ou un ester de sorbitan alcoxylé et un agent mouillant.

**4.** Procédé selon l'une des revendications 1 à 3, caractérisé en ce que les sucroglycérides sont préparés par transestérification de triglycérides, de préférence naturels, par le saccharose.

**5.** Procédé selon la revendication 4, caractérisé en ce que les triglycérides naturels sont choisis parmi le saindoux, le suif, l'huile d'arachide, l'huile de beurre, l'huile de graine de coton, l'huile de Pin, l'huile d'olive, l'huile de palme, l'huile de pépins de raisin, l'huile de poisson, l'huile de soja, l'huile de ricin, l'huile de colza, l'huile de coprah, l'huile de noix de coco.

**6.** Procédé selon l'une des revendications 1 à 5, caractérisé en ce que les sucroglycérides utilisés proviennent de l'huile de palme, du saindoux, de l'huile de coprah, du suif, de l'huile de colza, l'huile de ricin.

**7.** Procédé selon l'une des revendications 2 à 6, caractérisé en ce que l'émulsion aqueuse contient un phospholipide choisi parmi les lécithines brutes d'origine végétale ou animale, telles que la lécithine de soja, la lécithine du jaune d'oeuf ainsi que toute fraction de lécithine.

**8.** Procédé selon l'une des revendications 1 à 7, caractérisé en ce que l'huile est choisie parmi l'huile de colza, l'huile de tournesol, l'huile de palme, l'huile d'arachide, l'huile de lin, l'huile de coprah, l'huile de pépins de raisin, l'huile de noix, l'huile de poisson, l'oléate de méthyle et de préférence l'huile de colza, l'huile de tournesol, l'huile de soja et l'oléate de méthyle.

**9.** Procédé sel on l'une des revendications 2 à 8, caractérisé en ce que l'émulsion aqueuse comporte, en poids par rapport au volume total de l'émulsion :
- de 0,2 % à 15 % de sucroglycérides,
- de 0 % à 8 % de phospholipide,
- de 5 % à 70 % d'huile,

et de préférence :
- de 0,5 % à 10 % de sucroglycérides,
- de 0 % à 5 % de phospholipide,
- de 10 % à 60 % d'huile.

**10.** Procédé selon l'une des revendications 2 à 9, caractérisé en ce que l'émulsion aqueuse comporte des triglycérides alcoxylés et/ou des acides gras alcoxylés et/ou des esters de sorbitan et/ou des esters de sorbitan alcoxylés, plus particulièrement choisis parmi les triglycérides éthoxylés, les acides gras éthoxylés, les esters de sorbitan et les esters de sorbitan éthoxylés.

**11.** Procédé selon la revendication 10, caractérisé en ce que les triglycérides éthoxylés sont des triglycérides d'origine végétale ou animale, tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco, éthoxylés.

**12.** Procédé selon la revendication 10, caractérisé en ce que les acides gras éthoxylés sont des esters d'acides gras, tels que l'acide oléïque ou l'acide stéarique, éthoxylés.

**13.** Procédé selon la revendication 10, caractérisé en ce que les esters de sorbitan sont des esters du sorbitol cyclisé d'acides gras de $C_{10}$ à $C_{20}$ comme l'acide laurique, l'acide stéarique ou l'acide oléïque.

**14.** Procédé selon l'une des revendications 2 à 13, caractérisé en ce que l'émulsion aqueuse comporte de 0 à 10 % en poids, et de préférence de 0,2 % à 6 % en poids, de triglycérides alcoxylés et/ou d'acides gras alcoxylés et/ou d'esters de sorbitan et/ou d'esters de sorbitan alcoxylés par volume total de l'émulsion.

**15.** Procéeé selon l'une des revendications 1 à 14, caractérisé en ce que la matière active phytosanitaire est choisie parmi :
- la deltaméthrine,
- le propham,
- la tétraméthrine,
- le furalaxyl,
- l'heptachlor,
- le propanil,
- l'oxadiazon,
- le triflumizole,
- la diméthaméthrine,
- l'atrazine,
- le diuron,
- le néburon,
- le linuron,
- l'isoproturon,
- la simazine,
- l'améthryne,
- le phenmdipham,
- le pendiméthalin.

**16.** Procédé selon l'une des revendications 1 à 15, caractérisé en ce que la suspension aqueuse de matière active comporte un tensio-actif non-ionique choisi parmi :
- les di(phényl-1 éthyl) phénols alcoxylés,
- les tri(phényl-1 éthyl) phénols alcoxylés,
- les alkylphénols alcoxylés,
- les amines grasses alcoxylées,
- les alcools gras alcoxylés,
- les huiles de ricin alcoxylées,
- les polymères séquencés oxyde d'éthylène-oxyde de propylène (OE-OP) ou oxyde d'éthylène-oxy'de de propylène-oxyde d'éthylène (OE-OP-OE).

**17.** Procédé selon la revendication 16, caractérisé en ce que les motifs alcoxyles de ces tensio-actifs sont des motifs oxyéthylène et/ou oxypropylène, dont le nombre varie de 2 à 100 et de préférence de 4 à 50.

**18.** Procédé selon l'une des revendications 16 ou 17, caractérisé en ce que le tensio-actif non-ionique est choisi parmi :
- le di(phényl-1 éthyl)phénol éthoxylé avec 15 motifs oxyde d'éthylène (OE),
- le tri(phényl-1 éthyl)phénol éthoxylé avec 16 motifs OE,
- le tri(phényl-1 éthyl)phénol éthoxylé avec 25 motifs OE,

- le tri(phényl-1 éthyl)phénol éthoxylé avec 40 motifs OE,
- les tri(phényl-1 éthyl)phénols éthoxy-propoxylés,
- les nonylphénols éthoxy-propoxylés,
- les polymères triséquencés OE-OP-OE.

**19.** Procédé selon l'une des revendications 1 à 15, caractérisé en ce que la suspension aqueuse de matière active comporte un tensio-actif anionique choisi parmi :
- les esters phosphoriques des alkylphénols éthoxylés, des di(phényl-1 éthyl)phénols éthoxylés, des tri(phényl-1 éthyl)phénols éthoxylés, des alcools gras éthoxylés ;
- les esters sulfuriques des alkylphénols éthoxylés, des di(phényl-1 éthyl)phénols éthoxylés, des tri(phényl-1 éthyl)phénols éthoxylés, des alcools gras éthoxylés ;
- les esters sulfoniques des alkylphénols éthoxylés, des di(phényl-1 éthyl)phénols éthoxylés, des tri(phényl-1 éthyl)phénols éthoxylés ;
- les sels des acides polycarboxyliques, les homo- et copolymères d'acides polycarboxyliques (comme les acides polyacryliques et polyméthacryliques), les copolymères à base d'anhydride maléïque et de diisobutylène ;
- les alkylnaphtalène-sulfonates, les poly(alkylnaphtalène-sulfonates) ;
- les dihydroxydiphényl-sulfonates condensés avec le formol.

**20.** Procédé selon la revendication 19, caractérisé en ce que le tensio-actif anionique est choisi parmi :
- les sels de triéthanolamine des mono- et diester phosphoriques du tri(phényl-1 éthyl)phénol éthoxylé avec 16 motifs OE,
- le sulfate acide du di(phényl-1 éthy'l)phénol éthoxylé avec 11 motifs OE,
- le phosphate acide de nonylphénol éthoxylé avec 9 motifs OE,
- le méthylnaphtalène-sulfonate de sodium,
- le sel de sodium de l'acide polyacrylique.

**21.** Procédé selon l'une des revendications 2 à 20, caractérisé en ce que la suspension aqueuse de la matière active comporte de 5 % à 90 % en poids de matière active, par rapport au volume total de la suspension et de préférence de 10 % à 85 % en poids/volume.

**22.** Procédé selon la revendication 21, caractérisé en ce que la suspension aqueuse de la matière active comporte de 0,2 % à 15 % en poids de tensio-actif non-ionique et/ou anionique, et de préférence de 0,5 % à 10 % en poids par rapport au volume total de la suspension aqueuse.

**23.** Procédé selon la revendication 21, caractérisé en ce que la suspension aqueuse de la matière active comporte de
- 0,1 % à 5 % en poids de sucroglycérides et de phospholipide, et de préférence de 0,2 % à 4 %,
- 0,1 % à 3 % en poids de triglycéride alcoxylé et/ou d'acide gras alcoxylé et/ou d'ester de sorbitan et/ou d'ester de sorbitan alcoxylé tels que définis précédemment, et de préférence de 0,2 % à 2,8 %,
- 0,05 % à 1 % en poids d'un agent mouillant, et de préférence de 0,1 % à 0,8 %,

par rapport au volume total de la suspension aqueuse.

**24.** Procédé selon la revendication 23, caractérisé en ce que l'agent mouillant est choisi parmi les sels anioniques de tensio-actifs, les alcools alcoxylés ou les alkylphénols alcoxylés représentés par les formules suivantes :

$R_1$-$SO_3$-M
$R_2$-$SO_4$-M
$R_3$-$(OE)_n$-H
$R_3$-$(OP)_n$-H
$R_3$-$(OE\text{-}OP)_n$-H
$R_4$-COONa

dans lesquelles :
- $R_1$ représente
  . un radical alkylphényle (tel que dodécylphényle),

. un radical alkyle (tel que dodécyle),
. un radical bis(octyloxycarbonyl)-1,2 éthyle, (de préférence bis(éthyl-2 hexyloxycarbonyl)-1,2 éthyle,

- $R_2$ représente
  . un radical alkyle (tel que dodécyle),
  . un radical alkylphénol éthoxylé (tel que nonylphénol éthoxylé avec 2 à 50 motifs OE),
  . un radical alkyle éthoxylé,
- $R_3$ représente
  . un radical alkylaryle (tel que nonylphényle, alkylnaphtyle),
  . un radical alkyle ayant 8 à 20 atomes de carbone, et de préférence de 10 à 14 atomes de carbone,
- n est un nombre de 4 à 12,
- $R_4$ représente un radical alkyle ayant 10 à 22 atomes de carbone,
- M représente Na, K, $NH_4$ ou un cation triéthanolammonium.

**25.** Procédé selon la revendication 23, caractérisé en ce que l'agent mouillant est choisi parmi les tensio-actifs à base de silicone tels que des copolymères de polydiméthylsiloxane et soit d'homopolymère d'éthylène-glycol, soit de copolymère d'éthylène-glycol et de propylène-glycol.

**26.** Procédé selon la revendication 23, caractérisé en ce que l'agent mouillant est choisi parmi les tensio-actifs fluorés tels que des composés comportant une chaîne linéaire perfluorocarbonée, hydrophobe et oléophobe, et une partie hydrophile comportant un groupement sulfonique, acide ou neutralisé, un groupement carboxylique, un reste alcool éthoxylé.

**27.** Procédé selon la revendication 23, caractérisé en ce que dans la suspension aqueuse de matière active le rapport pondéral sucroglycérides/phospholipide est de 0 à 3.

**28.** Procédé selon l'une des revendications 1 à 27, caractérisé en ce que les proportions de suspension aqueuse et d'émulsion aqueuse sont telles que la suspo-émulsion contient de 5 % à 60 % en poids de matière active, par rapport à son volume total.

**29.** Procédé selon l'une des revendications 1 à 28, caractérisé en ce que les proportions de suspension et d'émulsion sont telles que la suspo-émulsion contient de 0,1 % à 12 % en poids de tensio-actif non-ionique et/ou anionique par rapport à son volume total.

**30.** Procédé selon l'une des revendications 1 à 29, caractérisé en ce que les proportions de suspension et d'émulsion sont telles que la suspo-émulsion contient de 0,2 % à 15 % en poids de sucroglycérides par rapport à son volume total.

**31.** Procédé selon l'une des revendications 1 à 30, caractérisé en ce que les proportions de suspension et d'émulsion sont telles que la suspo-émulsion contient de 0 % à 6 % en poids de phospholipide par rapport à son volume total.

**32.** Procédé selon l'une des revendications 1 à 31, caractérisé en ce que les proportions de suspension et d'émulsion sont telles que la suspo-émulsion contient de 0,1 % à 5 % en poids de triglycéride alcoxylé et/ou d'acide gras alcoxylé et/ou d'ester de sorbitan et/ou d'ester de sorbitan alcoxylé par rapport à son volume total.

**33.** Procédé selon l'une des revendications 1 à 32, caractérisé en ce que les proportions de suspension et d'émulsion sont telles que la suspo-émulsion contient de 0,05 % à 0,7 % en poids d'agent mouillant par rapport à son volume total.

**34.** Procédé selon l'une des revendications 1 à 33, caractérisé en ce que les proportions de suspension et d'émulsion sont telles que la suspo-émulsion contient de 3 % à 50 % en poids d'huile par rapport à son volume total.

## Claims

**Claims for the following Contracting States : AT, BE, CH, DE, DK, FR, GB, GR, IT, LI, LU, NL, SE**

1. Suspo-emulsion of a solid active plant-protection substance, of melting point greater than or equal to 45 °C, and with a solubility in water at 20 °C less than 5g/litre, characterised in that it comprises at least one oil, a surface-active system comprising at least sucroglycerides, the said active substance and either a nonionic and/or anionic surface-active agent, or a surface-active system comprising sucroglycerides, an alkoxylated triglyceride and/or an alkoxylated fatty acid and/or a sorbitan ester and/or an alkoxylated sorbitan ester.

2. Suspo-emulsion of active substance according to claim 1, characterised in that it can be obtained by mixing:
   - an agueous emulsion of at least one oil containing a surface-active system comprising at least sucroglycerides,
   - with an aqueous suspension of the said active substance, comprising at least either a nonionic and/or anionic surface-active agent, or a surface-active system comprising sucroglycerides, an alkoxylated triglyceride and/or an alkoxylated fatty acid and/or a sorbitan ester and/or an alkoxylated sorbitan ester.

3. Suspo-emulsion of active substance according to one of claims 1 and 2, characterised in that it can be obtained by mixing:
   - an aqueous emulsion of at least one oil containing a surface-active system comprising at least sucroglycerides,
   - with an aqueous suspension of the said active substance, comprising at least either a nonionic and/or anionic surface-active agent, or a surface-active system comprising sucroglycerides, an alkoxylated triglyceride and/or an alkoxylated fatty acid and/or a sorbitan ester and/or an alkoxylated sorbitan ester and a wetting agent.

4. Suspo-emulsion according to one of claims 1 to 3, characterised in that the sucroglycerides are prepared by transesterification of triglycerides, which are preferably natural, with saccharose.

5. Suspo-emulsion according to claim 4, characterised in that the natural triglycerides are chosen from among lard, tallow, groundnut oil, butter oil, cotton-seed oil, linseed oil, olive oil, palm oil, grape-seed oil, fish oil, soyabean oil, castor oil, colza oil, copra oil and coconut oil.

6. Suspo-emulsion according to one of claims 1 to 5, characterised in that the sucroglycerides used are obtained from palm oil, lard, copra oil, tallow, colza oil and castor oil.

7. Suspo-emulsion according to one of claims 2 to 6, characterised in that the aqueous emulsion contains a phospholipid chosen from among crude lecithins of plant or animal origin, such as soyabean lecithin, egg yolk lecithin as well as any lecithin fraction.

8. Suspo-emulsion according to one of claims 1 to 7, characterised in that the oil is chosen from among colza oil, sunflower oil, palm oil, groundnut oil, linseed oil, copra oil, grape-seed oil, nut oil, fish oil, methyl oleate and preferably colza oil, sunflower oil, soyabean oil, and methyl oleate.

9. Suspo-emulsion according to one of claims 2 to 8, characterised in that the aqueous emulsion contains, by weight relative to the total volume of the emulsion:
   - from 0.2 % to 15 % of sucroglycerides,
   - from 0 % to 8 % of phospholipid,
   - from 5 % to 70 % of oil,

   and preferably:
   - from 0.5 % to 10 % of sucroglycerides,
   - from 0 % to 5 % of phospholipid,
   - from 10 % to 60 % of oil.

10. Suspo-emulsion according to one of claims 2 to 9, characterised in that the aqueous emulsion contains alkoxylated triglycerides and/or alkoxylated fatty acids and/or sorbitan esters and/or alkoxylated sorbitan

esters, more particularly chosen from among ethoxylated triglycerides, ethoxylated fatty acids, sorbitan esters and ethoxylated sorbitan esters.

**11.** Suspo-emulsion according to claim 10, characterised in that the ethoxylated triglycerides are ethoxylated triglycerides of plant or animal origin, such as lard, tallow, groundnut oil, butter oil, cotton-seed oil, linseed oil, olive oil, palm oil, grape-seed oil, fish oil, soyabean oil, castor oil, colza oil, copra oil and coconut oil.

**12.** Suspo-emulsion according to claim 10, characterised in that the ethoxylated fatty acids are ethoxylated fatty acid eaters, such as oleic acid or stearic acid.

**13.** Suspo-emulsion according to claim 10, characterised in that the sorbitan eaters are cyclic sorbitol eaters of fatty acids from $C_{10}$ to $C_{20}$ such as lauric acid, stearic acid or oleic acid.

**14.** Suspo-emulsion according to one of claims 2 to 13, characterised in that the aqueous emulsion contains from 0 to 10 % by weight, preferably from 0.2 % to 6 % by weight, of alkoxylated triglycerides and/or alkoxylated fatty acids and/or sorbitan eaters and/or alkoxylated sorbitan eaters per total volume of the emulsion.

**15.** Suspo-emulsion according to one of claims 1 to 14, characterised in that the plant-protection active substance is chosen from among:
- deltamethrin,
- propham,
- tetramethrin,
- furalaxyl,
- heptachlor,
- propanil,
- oxadiazon,
- triflumizole,
- dimethamethrin,
- atrazine,
- diuron,
- neburon,
- linuron,
- isoproturon,
- simazine,
- ametryne,
- phenmedipham,
- pendimethalin.

**16.** Suspo-emulsion according to one of claims 1 to 15, characterised in that the aqueous suspension of active substance contains a nonionic surface-active agent chosen from among:
- alkoxylated di(1-phenylethyl)phenols,
- alkoxylated tri(1-phenylethyl)phenols,
- alkoxylated alkylphenols,
- alkoxylated fatty amines,
- alkoxylated fatty alcohols,
- alkoxylated castor oils,
- polymers of the sequence ethylene oxide-propylene oxide (EO-PO) or ethylene oxide-propylene oxide-ethylene oxide (EO-PO-EO).

**17.** Suspo-emulsion according to claim 16, characterised in that the alkoxylated units of these surface-active agents are oxyethylene and/or oxypropylene units, whose number varies from 2 to 100 and preferably from 4 to 50.

**18.** Suspo-emulsion according to one of claims 16 and 17, characterised in that the nonionic surface-active agent is chosen from among:
- ethoxylated di(1-phenylethyl)phenol with 15 ethylene oxide (EO) units,

- ethoxylated tri(1-phenylethyl)phenol with 16 EO units,
- ethoxylated tri(1-phenylethyl)phenol with 25 EO units,
- ethoxylated tri(1-phenylethyl)phenol with 40 EO units,
- ethoxypropoxylated tri(1-phenylethyl)phenols,
- ethoxypropoxylated nonylphenols,
- trisequenced polymers EO-PO-EO.

**19.** Suspo-emulsion according to one of claims 1 to 15, characterised in that the aqueous suspension of active substance contains an anionic surface-active agent chosen from among:
- phosphoric esters of ethoxylated alkylphenols, ethoxylated di(1-phenylethyl)phenols, ethoxylated tri(1-phenylethyl)phenols, ethoxylated fatty alcohols;
- sulphuric eaters of ethoxylated alkylphenols, ethoxylated di(1-phenylethyl)phenols, ethoxylated tri-(1-phenylethyl)phenols, ethoxylated fatty alcohols;
- sulphonic eaters of ethoxylated alkylphenols, ethoxylated di(1-phenylethyl)phenols, ethoxylated tri(1-phenylethyl)phenols;
- the salts of polycarboxylic acids, the homo- and copolymers of polycarboxylic acids (such as polyacrylic and polymethacrylic acids), copolymers based on maleic anhydride and diisobutylene;
- alkylnaphthaleneaulphonates, poly(alkylnaphthalenesulphonates);
- dihydroxydiphenylsulphonates condensed with formaldehyde.

**20.** Suspo-emulsion according to claim 19, characterised in that the anionic surface-active agent is chosen from among:
- triethanolamine salts of mono- and diphosphoric eaters of ethoxylated tri(1-phenylethyl)phenol with 16 EO units,
- the ethoxylated acid sulphate of di(1-phenylethyl)phenol with 11 EO units,
- the ethoxylated acid phosphate of nonylphenol with 9 EO units,
- sodium methylnaphthalenesulphonate,
- the sodium salt of polyacrylic acid.

**21.** Suspo-emulsion according to one of claims 2 to 20, characterised in that the aqueous suspension of the active substance contains from 5 % to 90 % by weight of active substance, relative to the total volume of the suspension, and preferably from 10 % to 85 % by weight/volume.

**22.** Suspo-emulsion according to claim 21, characterised in that the aqueous suspension of the active substance contains from 0.2 % to 15 % by weight of nonionic and/or anionic surface-active agent, and preferably from 0.5 % to 10 % by weight relative to the total volume of the aqueous suspension.

**23.** Suspo-emulsion according to claim 21, characterised in that the aqueous suspension of the active substance contains from:
- 0.1 % to 5 % by weight of sucroglycerides and phospholipid, preferably from 0.2 % to 4 %,
- 0.1 % to 3 % by weight of alkoxylated triglyceride and/or alkoxylated fatty acid and/or sorbitan ester and/or alkoxylated sorbitan ester as previously defined, preferably from 0.2 % to 2.8 %,
- 0.05 % to 1 % by weight of a wetting agent, preferably from 0.1 % to 0.8 %,

relative to the total volume of the aqueous suspension.

**24.** Suspo-emulsion according to claim 23, characterised in that the wetting agent is chosen from among anionic salts of surface-active agents, alkoxylated alcohols or alkoxylated alkylphenols represented by the following formulae:

$R_1$-$SO_3$-M
$R_2$-$SO_4$-M
$R_3$-$(EO)_n$-H
$R_3$-$(PO)_n$-H
$R_3$-$(EO\text{-}PO)_n$-H
$R_4$-COONa

in which:
- $R_1$ represents

  . an alkylphenyl radical (such as dodecylphenyl),
  . an alkyl radical (such as dodecyl),
  . a 1,2-bis(octyloxycarbonyl)ethyl radical, (preferably 1,2-bis(2-ethylhexyloxycarbonyl)ethyl),
- $R_2$ represents
  . an alkyl radical (such as dodecyl),
  . an ethoxylated alkylphenol radical (such as ethoxylated nonylphenol with 2 to 50 EO units),
  . an ethoxylated alkyl radical,
- $R_3$ represents
  . an alkylaryl radical (such as nonylphenyl or alkylnaphthyl),
  . an alkyl radical having 8 to 20 carbon atoms, preferably from 10 to 14 carbon atoms,
- n is a number from 4 to 12,
- $R_4$ represents an alkyl radical having 10 to 22 carbon atoms,
- M represents Na, K, $NH_4$ or a triethanolammonium cation.

**25.** Suspo-emulsion according to claim 23, characterised in that the wetting agent is chosen from among silicone-based surface-active agents such as copolymers of polydimethylsiloxane and either an ethylene glycol homopolymer or an ethylene glycol/propylene glycol copolymer.

**26.** Suspo-emulsion according to claim 23, characterized in that the wetting agent is chosen from among fluorinated surface-active agents such as compounds containing a hydrophobic and oleophobic, perfluorocarbonated linear chain and a hydrophilic region containing an acidic or neutralized sulphonic group, a carboxylic group and an ethoxylated alcohol residue.

**27.** Suspo-emulsion according to claim 23, characterised in that the weight ratio of sucroglycerides/phospholipid in the aqueous suspension of active substance is 0 to 3.

**28.** Suspo-emulsion according to one of claims 1 to 27, characterised in that the proportions of aqueous suspension and aqueous emulsion are such that the suspo-emulsion contains from 5 % to 60 % by weight of active substance, relative to its total volume.

**29.** Suspo-emulsion according to one of claims 1 to 28, characterised in that the proportions of suspension and emulsion are such that the suspo-emulsion contains from 0.1 % to 12 % by weight of nonionic and/or anionic surface-active agent relative to its total volume.

**30.** Suspo-emulsion according to one of claims 1 to 29, characterised in that the proportions of suspension and emulsion are such that the suspo-emulsion contains from 0.2 % to 15 % by weight of sucroglycerides relative to its total volume.

**31.** Suspo-emulsion according to one of claims 1 to 30, characterised in that the proportions of suspension and emulsion are such that the suspo-emulsion contains from 0 % to 6 % by weight of phospholipid relative to its total volume.

**32.** Suspo-emulsion according to one of claims 1 to 31, characterised in that the proportions of suspension and emulsion are such that the suspo-emulsion contains from 0.1 % to 5 % by weight of alkoxylated triglyceride and/or alkoxylated fatty acid and/or sorbitan ester and/or alkoxylated sorbitan ester relative to its total volume.

**33.** Suspo-emulsion according to one of claims 1 to 32, characterised in that the proportions of suspension and emulsion are such that the suspo-emulsion contains from 0.05 % to 0.7 % by weight of wetting agent relative to its total volume.

**34.** Suspo-emulsion according to one of claims 1 to 33, characterised in that the proportions of suspension and emulsion are such that the suspo-emulsion contains from 3 % to 50 % by weight of oil relative to its total volume.

**Claims for the following Contracting State : ES**

1. Process for treating plants, characterised in that use is made, possibly after dilution in water, of a suspo-emulsion of a solid active plant-protection substance, of melting point greater than or equal to 45 °C, and with a solubility in water at 20 °C less than 5g/litre, comprising at least one oil, a surface-active system comprising at least sucroglycerides, the said active substance and either a nonionic and/or anionic surface-active agent, or a surface-active system comprising sucroglycerides, an alkoxylated triglyceride and/or an alkoxylated fatty acid and/or a sorbitan ester and/or an alkoxylated sorbitan ester.

2. Process according to claim 1, characterised in that the suspo-emulsion can be obtained by mixing:
   - an aqueous emulsion of at least one oil containing a surface-active system comprising at least sucroglycerides,
   - with an aqueous suspension of the said active substance, comprising at least either a nonionic and/or anionic surface-active agent, or a surface-active system comprising sucroglycerides, an alkoxylated triglyceride and/or an alkoxylated fatty acid and/or a sorbitan ester and/or an alkoxylated sorbitan ester.

3. Process according to one of claims 1 and 2, characterised in that the suspo-emulsion can be obtained by mixing:
   - an aqueous emulsion of at least one oil containing a surface-active system comprising at least sucroglycerides,
   - with an aqueous suspension of the said active substance, comprising at least either a nonionic and/or anionic surface-active agent, or a surface-active system comprising sucroglycerides, an alkoxylated triglyceride and/or an alkoxylated fatty acid and/or a sorbitan ester and/or an alkoxylated sorbitan ester and a wetting agent.

4. Process according to one of claims 1 to 3, characterized in that the sucroglycerides are prepared by transesterification of triglycerides, which are preferably natural, with saccharose.

5. Process according to claim 4, characterised in that the natural triglycerides are chosen from among lard, tallow, groundnut oil, butter oil, cotton-seed oil, linseed oil, olive oil, palm oil, grape-seed oil, fish oil, soyabean oil, castor oil, colza oil, copra oil and coconut oil.

6. Process according to one of claims 1 to 5, characterized in that the sucroglycerides used are obtained from palm oil, lard, copra oil, tallow, colza oil and castor oil.

7. Process according to one of claims 2 to 6, characterized in that the aqueous emulsion contains a phospholipid chosen from among crude lecithins of plant or animal origin, such as soyabean lecithin, egg yolk lecithin as well as any lecithin fraction.

8. Process according to one of claims 1 to 7, characterized in that the oil is chosen from among colza oil, sunflower oil, palm oil, groundnut oil, linseed oil, copra oil, grape-seed oil, nut oil, fish oil, methyl oleate and preferably colza oil, sunflower oil, soyabean oil, and methyl oleate.

9. Process according to one of claims 2 to 8, characterised in that the aqueous emulsion contains, by weight relative to the total volume of the emulsion:
   - from 0.2 % to 15 % of sucroglycerides,
   - from 0 % to 8 % of phospholipid,
   - from 5 % to 70 % of oil,

   and preferably:
   - from 0.5 % to 10 % of sucroglycerides,
   - from 0 % to 5 % of phospholipid,
   - from 10 % to 60 % of oil.

10. Process according to one of claims 2 to 9, characterised in that the aqueous emulsion contains alkoxylated triglycerides and/or alkoxylated fatty acids and/or sorbitan esters and/or alkoxylated sorbitan esters, more particularly chosen from among ethoxylated triglycerides, ethoxylated fatty acids, sorbitan

esters and ethoxylated sorbitan esters.

**11.** Process according to claim 10, characterised in that the ethoxylated triglycerides are ethoxylated triglycerides of plant or animal origin, such as lard, tallow, groundnut oil, butter oil, cotton-seed oil, linseed oil, olive oil, palm oil, grape-seed oil, fish oil, soyabean oil, castor oil, colza oil, copra oil and coconut oil.

**12.** Process according to claim 10, characterised in that the ethoxylated fatty acids are ethoxylated fatty acid esters, such as oleic acid or stearic acid.

**13.** Process according to claim 10, characterised in that the sorbitan esters are cyclic sorbitol esters of fatty acids from $C_{10}$ to $C_{20}$ such as lauric acid, stearic acid or oleic acid.

**14.** Process according to one of claims 2 to 13, characterized in that the aqueous emulsion contains from 0 to 10 % by weight, preferably from 0.2 % to 6 % by weight, of alkoxylated triglycerides and/or alkoxylated fatty acids and/or sorbitan esters and/or alkoxylated sorbitan esters per total volume of the emulsion.

**15.** Process according to one of claims 1 to 14, characterized in that the plant-protection active substance is chosen from among:

- deltamethrin,
- propham,
- tetramethrin,
- furalaxyl,
- heptachlor,
- propanil,
- oxadiazon,
- triflumizole,
- dimethamethrin,
- atrazine,
- diuron,
- neburon,
- linuron,
- isoproturon,
- simazine,
- ametryne,
- phenmedipham,
- pendimethalin.

**16.** Process according to one of claims 1 to 15, characterised in that the aqueous suspension of active substance contains a nonionic surface-active agent chosen from among:

- alkoxylated di(1-phenylethyl)phenols,
- alkoxylated tri(1-phenylethyl)phenols,
- alkoxylated alkylphenols,
- alkoxylated fatty amines,
- alkoxylated fatty alcohols,
- alkoxylated castor oils,
- polymers of the sequence ethylene oxide-propylene oxide (EO-PO) or ethylene oxide-propylene oxide-ethylene oxide (EO-PO-EO).

**17.** Process according to claim 16, characterised in that the alkoxylated units of these surface-active agents are oxyethylene and/or oxypropylene units, whose number varies from 2 to 100 and preferably from 4 to 50.

**18.** Process according to one of claims 16 and 17, characterised in that the nonionic surface-active agent is chosen from among:

- ethoxylated di(1-phenylethyl)phenol with 15 ethylene oxide (EO) units,
- ethoxylated tri(1-phenylethyl)phenol with 16 EO units,

- ethoxylated tri(1-phenylethyl)phenol with 25 EO units,
- ethoxylated tri(1-phenylethyl)phenol with 40 EO units,
- ethoxypropoxylated tri(1-phenylethyl)phenols,
- ethoxypropoxylated nonylphenols,
- trisequenced polymers EO-PO-EO.

**19.** Process according to one of claims 1 to 15, characterised in that the aqueous suspension of active substance contains an anionic surface-active agent chosen from among:
   - phosphoric esters of ethoxylated alkylphenols, ethoxylated di(1-phenylethyl)phenols, ethoxylated tri(1-phenylethyl)phenols, ethoxylated fatty alcohols;
   - sulphuric esters of ethoxylated alkylphenols, ethoxylated di(1-phenylethyl)-phenols, ethoxylated tri(1-phenylethyl)-phenols, ethoxylated fatty alcohols;
   - sulphonic esters of ethoxylated alkylphenols, ethoxylated di(1-phenylethyl)-phenols, ethoxylated tri(1-phenylethyl)phenols;
   - the salts of polycarboxylic acids, the homo- and copolymers of polycarboxylic acids (such as polyacrylic and polymethacrylic acids), copolymers based on maleic anhydride and diisobutylene;
   - alkylnaphthalenesulphonates, poly(alkylnaphthalenesulphonates);
   - dihydroxydiphenylsulphonates condensed with formaldehyde.

**20.** Process according to claim 19, characterised in that the anionic surface-active agent is chosen from among:
   - triethanolamine salts of mono- and diphosphoric esters of ethoxylated tri(1-phenylethyl)phenol with 16 EO units,
   - the ethoxylated acid sulphate of di(1-phenylethyl)phenol with 11 EO units,
   - the ethoxylated acid phosphate of nonylphenol with 9 EO units,
   - sodium methylnaphthalenesulphonate,
   - the sodium salt of polyacrylic acid.

**21.** Process according to one of claims 2 to 20, characterized in that the aqueous suspension of the active substance contains from 5 % to 90 % by weight of active substance, relative to the total volume of the suspension, and preferably from 10 % to 85 % by weight/volume.

**22.** Process according to claim 21, characterised in that the aqueous suspension of the active substance contains from 0.2 % to 15 % by weight of nonionic and/or anionic surface-active agent, and preferably from 0.5 % to 10 % by weight relative to the total volume of the aqueous suspension.

**23.** Process according to claim 21, characterised in that the aqueous suspension of the active substance contains from:
   - 0.1 % to 5 % by weight of sucroglycerides and phospholipid, preferably from 0.2 % to 4 %,
   - 0.1 % to 3 % by weight of alkoxylated triglyceride and/or alkoxylated fatty acid and/or sorbitan ester and/or alkoxylated sorbitan ester as previously defined, preferably from 0.2 % to 2.8 %,
   - 0.05 % to 1 % by weight of a wetting agent, preferably from 0.1 % to 0.8 %,

   relative to the total volume of the aqueous suspension.

**24.** Process according to claim 23, characterised in that the wetting agent is chosen from among anionic salts of surface-active agents, alkoxylated alcohols or alkoxylated alkylphenols represented by the following formulae:

$R_1$-$SO_3$-M
$R_2$-$SO_4$-M
$R_3$-$(EO)_n$-H
$R_3$-$(PO)_n$-H
$R_3$-$(EO\text{-}PO)_n$-H
$R_4$-COONa

in which:
   - $R_1$ represents
      . an alkylphenyl radical (such as dodecylphenyl),

  . an alkyl radical (such as dodecyl),
  . a 1,2-bis(octyloxycarbonyl)ethyl radical, (preferably 1,2-bis(2-ethylhexyloxycarbonyl)ethyl),
- $R_2$ represents
  . an alkyl radical (such as dodecyl),
  . an ethoxylated alkylphenol radical (such as ethoxylated nonylphenol with 2 to 50 EO units),
  . an ethoxylated alkyl radical,
- $R_3$ represents
  . an alkylaryl radical (such as nonylphenyl or alkylnaphthyl),
  . an alkyl radical having 8 to 20 carbon atoms, preferably from 10 to 14 carbon atoms,
- n is a number from 4 to 12,
- $R_4$ represents an alkyl radical having 10 to 22 carbon atoms,
- M represents Na, K, $NH_4$ or a triethanolammonium cation.

**25.** Process according to claim 23, characterised in that the wetting agent is chosen from among silicone-based surface-active agents such as copolymers of polydimethylsiloxane and either an ethylene glycol homopolymer or an ethylene glycol/propylene glycol copolymer.

**26.** Process according to claim 23, characterised in that the wetting agent is chosen from among fluorinated surface-active agents such as compounds containing a hydrophobic and oleophobic, perfluorocarbonated linear chain and a hydrophilic region containing an acidic or neutralized sulphonic group, a carboxylic group and an ethoxylated alcohol residue.

**27.** Process according to claim 23, characterised in that the weight ratio of sucroglycerides/phospholipid in the aqueous suspension of active substance is 0 to 3.

**28.** Process according to one of claims 1 to 27, characterized in that the proportions of aqueous suspension and aqueous emulsion are such that the suspo-emulsion contains from 5 % to 60 % by weight of active substance, relative to its total volume.

**29.** Process according to one of claims 1 to 28, characterised in that the proportions of suspension and emulsion are such that the suspo-emulsion contains from 0.1 % to 12 % by weight of nonionic and/or anionic surface-active agent relative to its total volume.

**30.** Process according to one of claims 1 to 29, characterized in that the proportions of suspension and emulsion are such that the suspo-emulsion contains from 0.2 % to 15 % by weight of sucroglycerides relative to its total volume.

**31.** Process according to one of claims 1 to 30, characterized in that the proportions of suspension and emulsion are such that the suspo-emulsion contains from 0 % to 6 % by weight of phospholipid relative to its total volume.

**32.** Process according to one of claims 1 to 31, characterised in that the proportions of suspension and emulsion are such that the suspo-emulsion contains from 0.1 % to 5 % by weight of alkoxylated triglyceride and/or alkoxylated fatty acid and/or sorbitan ester and/or alkoxylated sorbitan ester relative to its total volume.

**33.** Process according to one of claims 1 to 32, characterised in that the proportions of suspension and emulsion are such that the suspo-emulsion contains from 0.05 % to 0.7 % by weight of wetting agent relative to its total volume.

**34.** Process according to one of claims 1 to 33, characterised in that the proportions of suspension and emulsion are such that the suspo-emulsion contains from 3 % to 50 % by weight of oil relative to its total volume.

**Patentansprüche**

**Patentansprüche für folgende Vertragsstaaten : AT, BE, CH, DE, DK, FR, GB, GR, IT, LI, LU, NL, SE**

1. Suspo-Emulsion aus festem Planzenschutzwirkstoff mit einem Schmelzpunkt über oder gleich 45 °C und einer Löslichkeit in Wasser bei 20 °C unter 5 g/l, dadurch gekennzeichnet, daß sie wenigstens ein Öl, ein oberflächenaktives System, mindestens enthaltend Zuckerglyceride, den genannten Wirkstoff und entweder ein nicht-ionisches und/oder anionisches oberflächenaktives Mittel oder ein oberflächenaktives System, enthaltend Zuckerglyceride, ein alkoxyliertes Triglycerid und/oder eine alkoxylierte Fettsäure und/oder einen Sorbitanester und/oder einen alkoxylierten Sorbitanester, enthält.

2. Suspo-Emulsion des Wirkstoffs gemäß Anspruch 1, dadurch gekennzeichnet, daß sie in der Lage ist, erhalten zu werden durch Mischen:
   - einer wäßrigen Emulsion mindestens eines Öls, enthaltend ein oberflächenaktives System, das mindestens Zuckerglyceride umfaßt,
   - mit einer wäßrigen Suspension des genannten Wirkstoffs, mindestens enthaltend entweder ein nicht-ionisches und/oder anionisches oberflächenaktives Mittel oder ein oberflächenaktives System, enthaltend Zuckerglyceride, ein alkoxyliertes Triglycerid und/oder eine alkoxylierte Fettsäure und/oder einen Sorbitanester und/oder einen alkoxylierten Sorbitanester.

3. Suspo-Emulsion des Wirkstoffs gemäß einem der Ansprüche 1 oder 2, dadurch gekennzeichnet, daß sie in der Lage ist, erhalten zu werden durch Mischen:
   - einer wäßrigen Emulsion mindestens eines Öls, enthaltend ein oberflächenaktives System, das mindestens Zuckerglyceride umfaßt,
   - mit einer wäßrigen Suspension des genannten Wirkstoffs, enthaltend mindestens entweder ein nicht-ionisches und/oder anionisches oberflächenaktives Mittel oder ein oberflächenaktives System, enthaltend Zuckerglyceride, ein alkoxyliertes Triglycerid und/oder eine alkoxylierte Fettsäure und/oder einen Sorbitanester und/oder einen alkoxylierten Sorbitanester und ein Netzmittel.

4. Suspo-Emulsion gemäß einem der Ansprüche 1 bis 3, dadurch gekennzeichnet, daß die Zuckerglyceride hergestellt sind durch Umesterung von vorzugsweise natürlichen Triglyceriden mit Saccharose.

5. Suspo-Emulsion gemäß Anspruch 4, dadurch gekennzeichnet, daß die natürlichen Triglyceride ausgewählt sind unter Schweineschmalz, Talg, Erdnußöl, Butteröl, Baumwollsamenöl, Leinöl, Olivenöl, Palmöl, Traubenkernöl, Fischöl, Sojaöl, Rizinusöl, Raps- bzw. Rüböl, Kopraöl bzw. Kokosöl, Kokosnußöl.

6. Suspo-Emulsion gemäß einem der Ansprüche 1 bis 5, dadurch gekennzeichnet, daß die verwendeten Zuckerglyceride von Palmöl, Schweineschmalz, Kopraöl, Talg, Raps- bzw. Rüböl, Rizinusöl stammen.

7. Suspo-Emulsion gemäß einem der Ansprüche 2 bis 6, dadurch gekennzeichnet, daß die wäßrige Emulsion ein Phospholipid enthält, ausgewählt unter den Rohlecithinen pflanzlichen oder tierischen Ursprungs, wie Sojalecithin, Eigelblecithin, sowie jegliche Lecithinfraktion.

8. Suspo-Emulsion gemäß einem der Ansprüche 1 bis 7, dadurch gekennzeichnet, daß das Öl ausgewählt ist aus Raps- bzw. Rüböl, Sonnenblumenkernöl, Palmöl, Erdnußöl, Leinöl, Kopraöl, Traubenkernöl, Nußöl, Fischöl, Methyloleat und vorzugsweise Raps- bzw. Rüböl, Sonnenblumenkernöl, Sojaöl und Methyloleat.

9. Suspo-Emulsion gemäß einem der Ansprüche 2 bis 8, dadurch gekennzeichnet, daß die wäßrige Emulsion in Gewicht enthält, bezogen auf das Gesamtvolumen der Emulsion:
   - 0,2 bis 15 % Zuckerglyceride,
   - 0 bis 8 % Phospholipid,
   - 5 bis 70 % Öl

   und vorzugsweise:
   - 0,5 bis 10 % Zuckerglyceride,
   - 0 bis 5 % Phospholipid,
   - 10 bis 60 % Öl.

10. Suspo-Emulsion gemäß einem der Ansprüche 2 bis 9, dadurch gekennzeichnet, daß die wäßrige Emulsion alkoxylierte Triglyceride und/oder alkoxylierte Fettsäuren und/oder Sorbitanester und/oder alkoxylierte Sorbitanester umfaßt, die besonders ausgewählt sind unter den ethoxylierten Triglyceriden, den ethoxylierten Fettsäuren, den Sorbitanestern und den ethoxylierten Sorbitanestern.

11. Suspo-Emulsion gemäß Anspruch 10, dadurch gekennzeichnet, daß die ethoxylierten Triglyceride ethoxylierte Triglyceride pflanzlichen oder tierischen Ursprungs sind, wie Schweineschmalz, Talg, Erdnußöl, Butteröl, Baumwollsamenöl, Leinöl, Olivenöl, Palmöl, Traubenkernöl, Fischöl, Sojaöl, Rizinusöl, Raps- bzw. Rüböl, Kopraöl, Kokosnußöl, ethoxyliert.

12. Suspo-Emulsion gemäß Anspruch 10, dadurch gekennzeichnet, daß die ethoxylierten Fettsäuren Ester von Fettsäuren sind, wie Oleinsäure oder Stearinsäure, ethoxyliert.

13. Suspo-Emulsion gemäß Anspruch 10, dadurch gekennzeichnet, daß die Sorbitanester Ester des cyclisierten Sorbits von $C_{10}$-$C_{20}$-Fettsäuren sind, wie Laurinsäure, Stearinsäure oder Oleinsäure.

14. Suspo-Emulsion gemäß einem der Ansprüche 2 bis 13, dadurch gekennzeichnet, daß die wäßrige Emulsion 0 bis 10 Gew.-% und vorzugsweise 0,2 bis 6 Gew.-% alkoxylierte Triglyceride und/oder alkoxylierte Fettsäuren und/oder Sorbitanester und/oder alkoxylierte Sorbitanester je Gesamtvolumen der Emulsion enthält.

15. Suspo-Emulsion gemäß einem der Ansprüche 1 bis 14, dadurch gekennzeichnet, daß der Pflanzenwirkstoff ausgewählt ist unter:
- Deltamethrin,
- Propham,
- Tetramethrin,
- Furalaxyl,
- Heptachlor,
- Propanil,
- Oxadiazon,
- Triflumizol,
- Dimethamethrin,
- Atrazin,
- Diuron,
- Neburon,
- Linuron,
- Isoproturon,
- Simazin,
- Amethryn,
- Phenmedipham,
- Pendimethalin.

16. Suspo-Emulsion gemäß einem der Ansprüche 1 bis 15, dadurch gekennzeichnet, daß die wäßrige Suspension des Wirkstoffs ein nicht-ionisches oberflächenaktives Mittel enthält, ausgewählt unter:
- den alkoxylierten Di-(1-phenylethyl)-phenolen,
- den alkoxylierten Tri-(1-phenylethyl)-phenolen,
- den alkoxylierten Alkylphenolen,
- den alkoxylierten Fettaminen,
- den alkoxylierten Fettalkoholen,
- den alkoxylierten Rizinusölen,
- den Blockpolymeren Ethylenoxid-Propylenoxid (OE-OP) oder Ethylenoxid-Propylenoxid-Ethylenoxid (OE-OP-OE).

17. Suspo-Emulsion gemäß Anspruch 16, dadurch gekennzeichnet, daß die Alkoxyleinheiten dieser oberflächenaktiven Stoffe Oxyethylen-Einheiten und/oder Oxypropylen-Einheiten sind, deren Zahl von 2 bis 100 und vorzugsweise von 4 bis 50 variiert.

**18.** Suspo-Emulsion gemäß einem der Ansprüche 16 oder 17, dadurch gekennzeichnet, daß das nichtionische oberflächenaktive Mittel ausgewählt ist unter:
- dem ethoxylierten Di-(1-phenylethyl)-phenol mit 15 Ethylenoxid-Einheiten (OE),
- dem ethoxylierten Tri-(1-phenylethyl)-phenol mit 16 OE-Einheiten,
- dem ethoxylierten Tri-(1-phenylethyl)-phenol mit 25 OE-Einheiten,
- dem ethoxylierten Tri-(1-phenylethyl)-phenol mit 40 OE-Einheiten,
- den ethoxy-propoxylierten Tri-(1-phenylethyl)-phenolen,
- den ethoxy-propoxylierten Nonylphenolen,
- den Blocktripolymeren OE-OP-OE.

**19.** Suspo-Emulsion gemäß einem der Ansprüche 1 bis 15, dadurch gekennzeichnet, daß die wäßrige Wirkstoffsuspension ein anionisches oberflächenaktives Mittel enthält, ausgewählt unter:
- den Phosphorsäureestern der ethoxylierten Alkylphenole, der ethoxylierten Di-(1-phenylethyl)-phenole, der ethoxylierten Tri-(1-phenylethyl)-phenole, der ethoxylierten Fettalkohole;
- den Schwefelsäurestern der ethoxylierten Alkylphenole, der ethoxylierten Di-(1-phenylethyl)-phenole, der ethoxylierten Tri-(1-phenylethyl)-phenole, der ethoxylierten Fettalkohole;
- den Sulfonsäureestern der ethoxylierten Alkylphenole, der ethoxylierten Di-(1-phenylethyl)-phenole, der ethoxylierten Tri-(1-phenylethyl)-phenole;
- den Salzen von Polycarbonsäuren, den Homo- und Copolymeren von Polycarbonsäuren (wie die Polyacrylsäuren und die Polymethacrylsäuren), den Copolymeren auf Basis von Maleinsäureanhydrid und Diisobutylen;
- den Alkylnaphthalin-sulfonaten, den Poly-(alkylnaphthalin-sulfonaten);
- den Dihydroxydiphenyl-sulfonaten, mit Formaldehyd kondensiert.

**20.** Suspo-Emulsion gemäß Anspruch 19, dadurch gekennzeichnet, daß das anionische oberflächenaktive Mittel ausgewählt ist unter:
- den Triethanolaminsalzen der Phosphorsäuremono- und -diester des ethoxylierten Tri-(1-phenylethyl)-phenols mit 16 OE-Einheiten,
- dem sauren Sulfat des ethoxylierten Di-(1-phenylethyl)-phenols mit 11 OE-Einheiten,
- dem sauren Phosphat des ethoxylierten Nonylphenols mit 9 OE-Einheiten,
- dem Natriummethylnaphthalin-sulfonat,
- dem Natriumsalz der Polyacrylsäure.

**21.** Suspo-Emulsion gemäß einem der Ansprüche 2 bis 20, dadurch gekennzeichnet, daß die wäßrige Suspension des Wirkstoffs 5 bis 90 Gew.-% Wirkstoff, bezogen auf das Gesamtvolumen der Suspension, und vorzugsweise 10 bis 85 % Gew./Vol. enthält.

**22.** Suspo-Emulsion gemäß Anspruch 21, dadurch gekennzeichnet, daß die wäßrige Suspension des Wirkstoffs 0,2 bis 15 Gew.-% nicht-ionisches und/oder anionisches oberflächenaktives Mittel und vorzugsweise 0,5 bis 10 Gew.-%, bezogen auf das Gesamtvolumen der wäßrigen Suspension, enthält.

**23.** Suspo-Emulsion gemäß Anspruch 21, dadurch gekennzeichnet, daß die wäßrige Suspension des Wirkstoffs enthält
- 0,1 bis 5 Gew.-% Zuckerglyceride und Phospholipid und vorzugsweise 0,2 bis 4 %,
- 0,1 bis 3 Gew.-% alkoxyliertes Triglycerid und/oder alkoxylierte Fettsäure und/oder Sorbitanester und/oder alkoxylierten Sorbitanester, wie sie vorstehend definiert sind, und vorzugsweise 0,2 bis 2,8 %,
- 0,05 bis 1 Gew.-% Netzmittel und vorzugsweise 0,1 bis 0,8 %,

bezogen auf das Gesamtvolumen der wäßrigen Suspension.

**24.** Suspo-Emulsion gemäß Anspruch 23, dadurch gekennzeichnet, daß das Netzmittel ausgewählt ist unter den anionischen Salzen von oberflächenaktiven Mitteln, den alkoxylierten Alkoholen oder alkoxylierten Alkylphenolen, dargestellt durch die folgenden Formeln:

$R_1 SO_3$-M
$R_2 SO_4$-M
$R_3$-$(OE)_n$-H
$R_3$-$(OP)_n$-H

$R_3$-(OE-OP)$_n$-H
$R_4$-COONa

worin:

- $R_1$ bedeutet:
  . einen Alkylphenylrest (wie Dodecylphenyl),
  . einen Alkylrest (wie Dodecyl),
  . einen Rest 1,2-Bis-(octyloxycarbonyl)-ethyl (vorzugsweise 1,2-Bis-(2-ethylhexyloxycarbonyl)-ethyl
- $R_2$ bedeutet:
  . einen Alkylrest (wie Dodecyl),
  . einen ethoxylierten Alkylphenolrest (wie ethoxyliertes Nonylphenol mit 2 bis 50 OE-Einheiten),
  . einen ethoxylierten Alkylrest,
- $R_3$ bedeutet:
  . einen Alkylarylrest (wie Nonylphenyl, Alkylnaphthyl),
  . einen Alkylrest mit 8 bis 20 Kohlenstoffatomen und vorzugsweise 10 bis 14 Kohlenstoffatomen,
- n ist eine Zahl von 4 bis 12,
- $R_4$ bedeutet einen Alkylrest mit 10 bis 22 Kohlenstoffatomen,
- M bedeutet Na, K, $NH_4$ oder ein Triethanolammoniumkation.

**25.** Suspo-Emulsion gemäß Anspruch 23, dadurch gekennzeichnet, daß das Netzmittel ausgewählt ist unter den oberflächenaktiven Mitteln auf Basis von Silikon wie Copolymere von Polydimethylsiloxan und entweder Ethylenglykol-Homopolymerem oder Ethylenglykol-Propylenglykol-Copolymerem.

**26.** Suspo-Emulsion gemäß Anspruch 23, dadurch gekennzeichnet, daß das Netzmittel ausgewählt ist unter den fluorierten oberflächenaktiven Mitteln wie Verbindungen, die eine hydrophobe und oleophobe lineare Perfluorkohlenstoffkette tragen und einen hydrophilen Teil, enthaltend eine saure oder neutralisierte Sulfonsäuregruppe, eine Carboxylgruppe, einen ethoxylierten Alkoholrest.

**27.** Suspo-Emulsion gemäß Anspruch 23, dadurch gekennzeichnet, daß in der wäßrigen Wirkstoffsuspension das Gewichtsverhältnis Zuckerglyceride/Phospholipid 0 bis 3 beträgt.

**28.** Suspo-Emulsion gemäß einem der Ansprüche 1 bis 27, dadurch gekennzeichnet, daß die Verhältnisse von wäßriger Suspension und wäßriger Emulsion derart sind, daß die Suspo-Emulsion 5 bis 60 Gew.-% Wirkstoff, bezogen auf ihr Gesamtvolumen, enthält.

**29.** Suspo-Emulsion gemäß einem der Ansprüche 1 bis 28, dadurch gekennzeichnet, daß die Verhältnisse von Suspension und Emulsion derart sind, daß die Suspo-Emulsion 0,1 bis 12 Gew.-% nicht-ionisches und/oder anionisches oberflächenaktives Mittel, bezogen auf ihr Gesamtvolumen, enthält.

**30.** Suspo-Emulsion gemäß einem der Ansprüche 1 bis 29, dadurch gekennzeichnet, daß die Verhältnisse von Suspension und Emulsion derart sind, daß die Suspo-Emulsion 0,2 bis 15 Gew.-% Zuckerglyceride, bezogen auf ihr Gesamtvolumen, enthält.

**31.** Suspo-Emulsion gemäß einem der Ansprüche 1 bis 30, dadurch gekennzeichnet, daß die Verhältnisse von Suspension und Emulsion derart sind, daß die Suspo-Emulsion 0 bis 6 Gew.-% Phospholipid, bezogen auf ihr Gesamtvolumen, enthält.

**32.** Suspo-Emulsion gemäß einem der Ansprüche 1 bis 31, dadurch gekennzeichnet, daß die Verhältnisse von Suspension und Emulsion derart sind, daß die Suspo-Emulsion 0,1 bis 5 Gew.-% alkoxyliertes Triglycerid und/oder alkoxylierte Fettsäure und/oder Sorbitanester und/oder alkoxylierten Sorbitanester, bezogen auf ihr Gesamtvolumen, enthält.

**33.** Suspo-Emulsion gemäß einem der Ansprüche 1 bis 32, dadurch gekennzeichnet, daß die Verhältnisse von Suspension und Emulsion derart sind, daß die Suspo-Emulsion 0,05 bis 0,7 Gew.-% Netzmittel, bezogen auf ihr Gesamtvolumen, enthält.

**34.** Suspo-Emulsion gemäß einem der Ansprüche 1 bis 33, dadurch gekennzeichnet, daß die Verhältnisse von Suspension und Emulsion derart sind, daß die Suspo-Emulsion 3 bis 50 Gew.-% Öl, bezogen auf ihr Gesamtvolumen, enthält.

**Patentansprüche für folgenden Vertragsstaat : ES**

**1.** Verfahren zur Behandlung von Pflanzen, dadurch gekennzeichnet, daß man gegebenenfalls nach Verdünnung mit Wasser eine Suspo-Emulsion von festem Pflanzenschutzwirkstoff mit einem Schmelzpunkt höher oder gleich 45 °C und von einer Löslichkeit in Wasser bei 20 °C unterhalb 5 g/l verwendet, die wenigstens ein Öl, ein oberflächenaktives System, mindestens enthaltend Zuckerglyceride, den genannten Wirkstoff und entweder ein nicht-ionisches und/oder anionisches oberflächenaktives Mittel oder ein oberflächenaktives System, enthaltend Zuckerglyceride, ein alkoxyliertes Triglycerid und/oder eine alkoxylierte Fettsäure und/oder einen Sorbitanester und/oder einen alkoxylierten Sorbitanester.

**2.** Verfahren gemäß Anspruch 1, dadurch gekennzeichnet, daß die Suspo-Emulsion in der Lage ist, erhalten zu werden durch Mischen:
- einer wäßrigen Emulsion mindestens eines Öls, enthaltend ein oberflächenaktives System, das mindestens Zuckerglyceride umfaßt,
- mit einer wäßrigen Suspension des genannten Wirkstoffs, mindestens umfassend entweder ein nicht-ionisches und/oder anionisches oberflächenaktives Mittel oder ein oberflächenaktives System, umfassend Zuckerglyceride, ein alkoxyliertes Triglycerid und/oder eine alkoxylierte Fettsäure und/oder einen Sorbitanester und/oder einen alkoxylierten Sorbitanester.

**3.** Verfahren gemäß einem der Ansprüche 1 oder 2, dadurch gekennzeichnet, daß die Suspo-Emulsion in der Lage ist, erhalten zu werden durch Mischen:
- einer wäßrigen Emulsion mindestens eines Öls, enthaltend ein oberflächenaktives System, mindestens umfassend Zuckerglyceride,
- mit einer wäßrigen Suspension des genannten Wirkstoffs, umfassend mindestens entweder ein nicht-ionisches und/oder anionisches oberflächenaktives Mittel oder ein oberflächenaktives System, umfassend Zuckerglyceride, ein alkoxyliertes Triglycerid und/oder eine alkoxylierte Fettsäure und/oder einen Sorbitanester und/oder einen alkoxylierten Sorbitanester und ein Netzmittel.

**4.** Verfahren gemäß einem der Ansprüche 1 bis 3, dadurch gekennzeichnet, daß die Zuckerglyceride hergestellt sind durch Umesterung von vorzugsweise natürlichen Triglyceriden mit Saccharose.

**5.** Verfahren gemäß Anspruch 4, dadurch gekennzeichnet, daß die natürlichen Triglyceride ausgewählt sind unter Schweineschmalz, Talg, Erdnußöl, Butteröl, Baumwollsamenöl, Leinöl, Olivenöl, Palmöl, Traubenkernöl, Fischöl, Sojaöl, Rizinusöl, Raps- bzw. Rüböl, Kopraöl, Kokosnußöl.

**6.** Verfahren gemäß einem der Ansprüche 1 bis 5, dadurch gekennzeichnet, daß die verwendeten Zuckerglyceride von Palmöl, Schweineschmalz, Kopraöl, Talg, Raps- bzw. Rüböl, Rizinusöl stammen.

**7.** Verfahren gemäß einem der Ansprüche 2 bis 6, dadurch gekennzeichnet, daß die wäßrige Emulsion ein Phospholipid enthält, ausgewählt unter den rohen Lecithinen pflanzlichen oder tierischen Ursprungs, wie Sojalecithin, Eigelblecithin, sowie jegliche Lecithinfraktion.

**8.** Verfahren gemäß einem der Ansprüche 1 bis 7, dadurch gekennzeichnet, daß das Öl ausgewählt ist unter Raps- bzw. Rüböl, Sonnenblumenkernöl, Palmöl, Erdnußöl, Leinöl, Kopraöl, Traubenkernöl, Nußöl, Fischöl, Methyloleat, und vorzugsweise Raps- bzw. Rüböl, Sonnenblumenkernöl, Sojaöl und Methyloleat.

**9.** Verfahren gemäß einem der Ansprüche 2 bis 8, dadurch gekennzeichnet, daß die wäßrige Emulsion in Gewicht, bezogen auf das Gesamtvolumen der Emulsion, enthält:
- 0,2 bis 15 % Zuckerglyceride,
- 0 bis 8 % Phospholipid,
- 5 bis 70 % Öl

und vorzugsweise:
- 0,5 bis 10 % Zuckerglyceride,

- 0 bis 5 % Phospholipid,
- 10 bis 60 % Öl.

**10.** Verfahren gemäß einem der Ansprüche 2 bis 9, dadurch gekennzeichnet, daß die wäßrige Emulsion alkoxylierte Triglyceride und/oder alkoxylierte Fettsäuren und/oder Sorbitanester und/oder alkoxylierte Sorbitanester umfaßt, insbesondere ausgewählt unter den ethoxylierten Triglyceriden, den ethoxylierten Fettsäuren, den Sorbitanestern und den ethoxylierten Sorbitanestern.

**11.** Verfahren gemäß Anspruch 10, dadurch gekennzeichnet, daß die ethoxylierten Triglyceride ethoxylierte Triglyceride pflanzlichen oder tierischen Ursprungs sind, wie Schweineschmalz, Talg, Erdnußöl, Butteröl, Baumwollsamenöl, Leinöl, Olivenöl, Palmöl, Traubenkernöl, Fischöl, Sojaöl, Rizinusöl, Raps. bzw. Rüböl, Kopraöl, Kokosnußöl, ethoxyliert.

**12.** Verfahren gemäß Anspruch 10, dadurch gekennzeichnet, daß die ethoxylierten Fettsäuren Ester von Fettsäuren, wie Oleinsäure oder Stearinsäure, sind ethoxyliert.

**13.** Verfahren gemäß Anspruch 10, dadurch gekennzeichnet, daß die Sorbitanester Ester des cyclisierten Sorbits von $C_{10}$-$C_{20}$-Fettsäuren sind, wie Laurinsäure, Stearinsäure oder Oleinsäure.

**14.** Verfahren gemäß einem der Ansprüche 2 bis 13, dadurch gekennzeichnet, daß die wäßrige Emulsion 0 bis 10 Gew.-% und vorzugsweise 0,2 bis 6 Gew.-% alkoxylierte Triglyceride und/oder alkoxylierte Fettsäuren und/oder Sorbitanester und/oder alkoxylierte Sorbitanester pro Gesamtvolumen der Emulsion enthält.

**15.** Verfahren gemäß einem der Ansprüche 1 bis 14, dadurch gekennzeichnet, daß der Pflanzenschutzwirkstoff ausgewählt ist unter:
- Deltamethrin,
- Propham,
- Tetramethrin,
- Furalaxyl,
- Heptachlor,
- Propanil,
- Oxadiazon,
- Triflumizol,
- Dimethamethrin,
- Atrazin,
- Diuron,
- Neburon,
- Linuron,
- Isoproturon,
- Simazin,
- Amethryn,
- Phenmedipham,
- Pendimethalin.

**16.** Verfahren gemäß einem der Ansprüche 1 bis 15, dadurch gekennzeichnet, daß die wäßrige Wirkstoffsuspension ein nicht-ionisches oberflächenaktives Mittel umfaßt, ausgewählt unter:
- den alkoxylierten Di-(1-phenylethyl)-phenolen,
- den alkoxylierten Tri-(1-phenylethyl)-phenolen,
- den alkoxylierten Alkylphenolen,
- den alkoxylierten Fettaminen,
- den alkoxylierten Fettalkoholen,
- den alkoxylierten Rizinusölen,
- den Block-polymeren Ethylenoxid-Propylenoxid (OE-OP) oder Ethylenoxid-Propylenoxid-Ethylenoxid (OE-OP-OE).

**17.** Verfahren gemäß Anspruch 16, dadurch gekennzeichnet, daß die Alkoxyleinheiten dieser oberflächenaktiven Stoffe Oxyethylen-Einheiten und/oder Oxypropylen-Einheiten sind, deren Zahl von 2 bis 100

und vorzugsweise von 4 bis 50 variiert.

**18.** Verfahren gemäß einem der Ansprüche 16 oder 17, dadurch gekennzeichnet, daß das nicht-ionische oberflächenaktive Mittel ausgewählt ist unter:
- dem ethoxylierten Di-(1-phenylethyl)-phenol mit 15 Ethylenoxid-Einheiten (OE),
- dem ethoxylierten Tri-(1-phenylethyl)-phenol mit 16 OE-Einheiten,
- dem ethoxylierten Tri-(1-phenylethyl)-phenol mit 25 OE-Einheiten,
- dem ethoxylierten Tri-(1-phenylethyl)-phenol mit 40 OE-Einheiten,
- den ethoxy-propoxylierten Tri-(1-phenylethyl)-phenolen,
- den ethoxy-propoxylierten Nonylphenolen,
- den Blocktripolymeren OE-OP-OE.

**19.** Verfahren gemäß einem der Ansprüche 1 bis 15, dadurch gekennzeichnet, daß die wäßrige Wirkstoffsuspension ein anionisches oberflächenaktives Mittel umfaßt, ausgewählt unter:
- den Phosphorsäureestern der ethoxylierten Alkylphenole, der ethoxylierten Di-(1-phenylethyl)-phenole, der ethoxylierten Tri-(1-phenylethyl)-phenole, der ethoxylierten Fettalkohole;
- den Schwefelsäureestern der ethoxylierten Alkylphenole, der ethoxylierten Di-(1-phenylethyl)-phenole, der ethoxylierten Tri-(1-phenylethyl)-phenole, der ethoxylierten Fettalkohole;
- den Sulfonsäureestern der ethoxylierten Alkylphenole, der ethoxylierten Di-(1-phenylethyl)-phenole, der ethoxylierten Tri-(1-phenylethyl)-phenole;
- den Salzen der Polycarbonsäuren, den Homo- und Copolymeren von Polycarbonsäuren (wie die Polyacrylsäuren und Polymethacrylsäuren), den Copolymeren auf Basis von Maleinsäureanhydrid und Diisobutylen;
- den Alkylnaphthalin-sulfonaten, den Poly(alkylnaphthalin-sulfonaten);
- den Dihydroxydiphenyl-sulfonaten, mit Formaldehyd kondensiert.

**20.** Verfahren gemäß Anspruch 19, dadurch gekennzeichnet, daß das anionische oberflächenaktive Mittel ausgewählt ist unter:
- den Triethanolaminsalzen der Phosphorsäuremono- und und -diester des ethoxylierten Tri-(1-phenylethyl)-phenols mit 16 OE-Einheiten,
- dem sauren Sulfat des ethoxylierten Di-(1-phenylethyl)-phenols mit 11 OE-Einheiten,
- dem sauren Phosphat des ethoxylierten Nonylphenols mit 9 OE-Einheiten,
- dem Natriummethylnaphthalin-sulfonat,
- dem Natriumsalz der Polyacrylsäure.

**21.** Verfahren gemäß einem der Ansprüche 2 bis 20, dadurch gekennzeichnet, daß die wäßrige Suspension des Wirkstoffs 5 bis 90 Gew.-% Wirkstoff umfaßt, bezogen auf das Gesamtvolumen der Suspension, und vorzugsweise 10 bis 85 % Gew./Vol.

**22.** Verfahren gemäß Anspruch 21, dadurch gekennzeichnet, daß die wäßrige Suspension des Wirkstoffs 0,2 bis 15 Gew.-% nicht-ionisches und/oder anionisches oberflächenaktives Mittel und vorzugsweise 0,5 bis 10 Gew.-%, bezogen auf das Gesamtvolumen der wäßrigen Suspension, umfaßt.

**23.** Verfahren gemäß Anspruch 21, dadurch gekennzeichnet, daß die wäßrige Suspension des Wirkstoffs umfaßt
- 0,1 bis 5 Gew.-% Zuckerglyceride und Phospholipid und vorzugsweise 0,2 bis 4 %,
- 0,1 bis 3 Gew.-% alkoxyliertes Triglycerid und/oder alkoxylierte Fettsäure und/oder Sorbitanester und/oder alkoxylierten Sorbitanester, wie sie vorstehend definiert sind, und vorzugsweise 0,2 bis 2,8 %,
- 0,05 bis 1 Gew.-% eines Netzmittels und vorzugsweise 0,1 bis 0,8 %,

bezogen auf das Gesamtvolumen der wäßrigen Suspension.

**24.** Verfahren gemäß Anspruch 23, dadurch gekennzeichnet, daß das Netzmittel ausgewählt ist unter den anionischen Salzen von oberflächenaktiven Mitteln, den alkoxylierten Alkoholen oder den alkoxylierten Alkylphenolen, dargestellt durch die folgenden Formeln:

$R_1 SO_3$-M
$R_2 SO_4$-M

$R_3$-$(OE)_n$-H
$R_3$-$(OP)_n$-H
$R_3$-$(OE$-$OP)_n$-H
$R_4$-COONa

worin:

- $R_1$ bedeutet:
  . einen Alkylphenylrest (wie Dodecylphenyl),
  . einen Alkylrest (wie Dodecyl),
  . einen Rest 1,2-Bis-(octyloxycarbonyl)-ethyl (vorzugsweise 1,2-Bis-(2-ethylhexyloxycarbonyl)-ethyl,
- $R_2$ bedeutet:
  . einen Alkylrest (wie Dodecyl),
  . einen ethoxylierten Alkylphenolrest (wie ethoxyliertes Nonylphenol mit 2 bis 50 OE-Einheiten),
  . einen ethoxylierten Alkylrest,
- $R_3$ bedeutet:
  . einen Alkylarylrest (wie Nonylphenyl, Alkylnaphthyl),
  . einen Alkylrest mit 8 bis 20 Kohlenstoffatomen und vorzugsweise mit 10 bis 14 Kohlenstoffatomen,
- n ist eine Zahl von 4 bis 12,
- $R_4$ bedeutet einen Alkylrest mit 10 bis 22 Kohlenstoffatomen,
- M bedeutet Na, K, $NH_4$ oder ein Triethanolammoniumkation.

**25.** Verfahren gemäß Anspruch 23, dadurch gekennzeichnet, daß das Netzmittel ausgewählt ist unter den oberflächenaktiven Mitteln auf Silikonbasis, wie Copolymere von Polydimethylsiloxan und entweder Ethylenglykol-Homopolymerem oder Ethylenglykol-Propylenglykol-Copolymerem.

**26.** Verfahren gemäß Anspruch 23, dadurch gekennzeichnet, daß das Netzmittel ausgewählt ist unter den fluorierten oberflächenaktiven Stoffen wie Verbindungen, die eine hydrophobe und oleophobe lineare Perfluorkohlenstoffkette enthalten, und einen hydrophilen Teil, umfassend eine saure oder neutralisierte Sulfonsäuregruppe, eine Carboxylgruppe, einen ethoxylierten Alkoholrest.

**27.** Verfahren gemäß Anspruch 23, dadurch gekennzeichnet, daß in der wäßrigen Wirkstoffsuspension das Gewichtsverhältnis Zuckerglyceride/Phospholipid 0 bis 3 beträgt.

**28.** Verfahren gemäß einem der Ansprüche 1 bis 27, dadurch gekennzeichnet, daß die Verhältnisse von wäßriger Suspension und wäßriger Emulsion derart sind, daß die Suspo-Emulsion 5 bis 60 Gew.-% Wirkstoff, bezogen auf ihr Gesamtvolumen, enthält.

**29.** Verfahren gemäß einem der Ansprüche 1 bis 28, dadurch gekennzeichnet, daß die Verhältnisse von Suspension und Emulsion derart sind, daß die Suspo-Emulsion 0,1 bis 12 Gew.-% nicht-ionischen und/oder anionischen oberflächenaktiven Stoff, bezogen auf ihr Gesamtvolumen, enthält.

**30.** Verfahren gemäß einem der Ansprüche 1 bis 29, dadurch gekennzeichnet, daß die Verhältnisse von Suspension und Emulsion derart sind, daß die Suspo-Emulsion 0,2 bis 15 Gew.-% Zuckerglyceride, bezogen auf ihr Gesamtvolumen, enthält.

**31.** Verfahren gemäß einem der Ansprüche 1 bis 30, dadurch gekennzeichnet, daß die Verhältnisse von Suspension und Emulsion derart sind, daß die Suspo-Emulsion 0 bis 6 Gew.-% Phospholipid, bezogen auf ihr Gesamtvolumen, enthält.

**32.** Verfahren gemäß einem der Ansprüche 1 bis 31, dadurch gekennzeichnet, daß die Verhältnisse von Suspension und Emulsion derart sind, daß die Suspo-Emulsion 0,1 bis 5 Gew.-% alkoxyliertes Triglycerid und/oder alkoxylierte Fettsäure und/oder Sorbitanester und/oder alkoxylierten Sorbitanester, bezogen auf ihr Gesamtvolumen, enthält.

**33.** Verfahren gemäß einem der Ansprüche 1 bis 32, dadurch gekennzeichnet, daß die Verhältnisse von Suspension und Emulsion derart sind, daß die Suspo-Emulsion 0,05 bis 0,7 Gew.-% Netzmittel,

bezogen auf ihr Gesamtvolumen, enthält.

**34.** Verfahren gemäß einem der Ansprüche 1 bis 33, dadurch gekennzeichnet, daß die Verhältnisse von Suspension und Emulsion derart sind, daß die Suspo-Emulsion 3 bis 50 Gew.-% Öl, bezogen auf ihr Gesamtvolumen, enthält.